# EUROPEAN PATENT SPECIFICATION

(11) **EP 1 321 857 B1**
(45) Date of publication and mention of the grant of the patent: **08.12.2010**
(21) Application number: 00962948.6
(22) Date of filing: 28.09.2000
(51) Int. Cl.: H04L 29/06, G06F 15/177

(54) **Computer System, Control Method for a Computer System, and a Recording Medium**
Computersystem, Steuerverfahren für ein Computersystem und Aufzeichnungsmedium
Système informatique, procédé de commande pour un système informatique et support d'enregistrement

(43) Date of publication of application: 25.06.2003
(73) Proprietor: NTT Comware Corporation, Tokyo 108-8019 (JP)
(72) Inventor: YAE, Mitsuo, c/o NTT Comware Corporation, Tokyo 108-8019 (JP)
(74) Representative: Poulin, Gérard
(86) International application number: PCT/JP2000/006732
(87) International publication number: WO 2002/027521

(56) References cited:
- EP-A- 1 286 271
- WO-A-98/14897
- WO-A2-98/14897
- WO-A2-98/14898
- GB-A- 2 325 543
- GB-A- 2 330 739
- GB-A- 2 330 739
- JP-A- 10 173 654
- JP-A- 11 288 393
- JP-A- 11 288 394

## Description

### TECHNICAL FIELD

The present invention relates to a computer system, a computer system control method and a recording medium. In particular, the invention relates to a technique for a computer system with a plurality of terminals connected via a network, for maintaining consistency of local shared information in a distributed computer system where a server function is distributed over respective terminals.

### BACKGROUND ART

In a computer system which has a plurality of terminals mutually connected via a network, there is the case where multiple units of terminals of are handled as a group, and programs and data corresponding to the programs, stored in the respective terminals are made shared data within each group, and the computer system is operated so that this shared data becomes the latest condition for all the terminals within the group.

Incidentally, in the case where the computer system executes for example an application of a multiplayer type, such as a role playing game, the terminals within the group are frequently interchanged due to midway participation, or midway secession. Therefore if the common data of the respective terminals is to be maintained in the latest condition, the processing load on the server device becomes extremely high.

More specifically, in a role playing game performed by several people, control of information of players in the game or of objects which control (operate) a control program or the like is necessary. To explain in more detail, control of information as to what is the position of respective objects in virtual space, and as to what influence the result of movement of the object will exert on another object positioned close to the object in virtual space becomes necessary.

Here, object stands for a body, or characters (human beings etc.) which behave independently of each other within virtual space provided by an application program. For example, this corresponds to a player character (stage character), a treasure case or the like, in a role playing game. This is executed as a process which moves objects one by one on a computer. As the object, there is a character which moves by instructions of users linked to the input of the respective terminals. Furthermore, there is a so called no player character (NPC) or the like where movement instructions are by means of an AI (artificial intelligence) program rather than by user operation. Instructions with respect to objects include participation in and secession from within the virtual space of the object.

Furthermore, object movement includes all kinds of movement defined by the application of the role playing game. That is to say, movement such as approaching a human character object, opening a treasure box object, a human character object flourishing a sword, a human character object using a tool and so on.

Heretofore, in order to communicate a " change of scene" produced by performing such movement, to another object located close to the object performing this movement, the change of scene is communicated to a server computer of a center.

As a result, in the server computer it is necessary to perform position computation in order to detect the other object which is located close to the object which has performed the movement. Furthermore, in the server computer, it is necessary to perform simultaneous multicast transmission in order to transmit the "change of scene" with respect to the detected other object.

The load on the server computer corresponding to the continuous movement (position computation and simultaneous multicast transmission) in order to transmit this "change of scene" is rapidly increased with an increase in the number of participants in a game.

Consequently, in such a computer system, a high performance server computer is necessary. In particular, there is the problem in that it becomes difficult to economically realize the construction of a large-scale computer.

Furthermore, considering operational testing accompanying development of the computer system, the existence of the server computer means that it is necessary to respectively test the program on this server computer, and the programs of respective terminals which make up the computer system. Consequently, also in the overall testing for verifying the coordinated operation of the programs of the server computer and the terminals, there is a problem in that it becomes necessary to perform this for each of the respective application programs.

Document (JP 10 173654 A & US 6 173 314) discloses a computer system with groups constructed by a plurality of terminals in which a terminal which functions as a relay terminal is fixed.

Document GB -A-233 739 A discloses a plurality of remote users communicate through a network to play a multi-user game which has a game space 200 (for example comprising a number of regions or rooms A, B, C, D, E, X). Users generate data packets for other users in the game. In order to increase scalability of game play and reduce the amount of computation, a user transmits data packets to a selected group of other users only. This group comprises other users who are currently located in the same region of game space as the user or an adjacent region from which the current region is visible. Region visibility relationships and user proximity relationships are held in a region-view table and a user-region table respectively. Tables are then updated throughout the game as users move around the game space.
Document EP-A- 1286 271 discloses a data sharing method in which data is shared within a group composed of a plurality of terminals interconnected via a network, in which, in the case an update is generated for shared data that contains basic data shared within the group and member data relating to each terminal within the group, a simultaneous multicast transmission terminal determination step in which any one of the plurality of terminals is determined to be a simultaneous multicast transmission terminal that simultaneously transmits update information relating to updating to each terminal within the group according to a predetermined determination method and, an updating step in which shared data is updated according to the received update information in each terminal that has received the simultaneously transmitted update information.

Therefore, an object of the present invention is to take into consideration the above mentioned situation and provide a computer system, a computer system control method, and a terminal and recording media which enables consistency of the shared information stored in the respective terminals to be maintained, while achieving a lightening in the load of the processing in the respective terminals without using a server computer.

### DISCLOSURE OF THE INVENTION

A first aspect of the present invention is characterized in that a plurality of terminals mutually connected via network, and a plurality of control groups constructed from said plurality of terminals, wherein the construction is such that said terminals arbitrarily belong to one or more of said control groups, one or more of terminals within the plurality of said terminals relay information within one of said control groups, and said one or more of terminals in one of said control groups transmit information with the others of said plurality of control groups to share data each other, and, in the case where the number of said terminals belonging to said control group becomes less than a previously set minimum construction terminal number, said terminals belonging to another control group different from said control group or a previously determined standby terminal which does not belong to any of the control groups are made to belong to said control group.

A second aspect of the present invention is that, in the first aspect of the invention, one or a plurality of relay terminals of said relay terminals function as an inter-group relay terminals which relays information between the other of said control groups.

A third aspect of the present invention is that, in the first aspect of the invention, said terminal can participate with an arbitrary control group to which it belongs, or can disengage from an arbitrary control group to which it belongs

A fourth aspect of the present invention is that, in the first aspect of the invention, said terminal belonging to one of said control groups shares information unique to said control group.

A fifth aspect of the present invention is that, in the fourth aspect of the invention, after said control group has been once constructed, said terminal continues to maintain said unique information until said control group disappears.

A sixth aspect of the present invention is that, in the second aspect of the invention, said inter-group relay terminal, when exchange of information is performed between an information exchange source control group being a control group to which said inter-group relay terminal belongs, and an information exchange destination control group being another of said control groups, is a control group other than said information exchange destination control group, and said information exchange is performed via one or a plurality of control groups which are capable of communication with both of said information exchange source control group and said information exchange destination control group.

A seventh aspect of the present invention is that, in the second aspect of the invention, said control group provides independently or in response to a request from another control group, a terminal belonging to said control group as said inter-group relay terminal..

An eighth aspect of the present invention is that, in the second aspect of the invention, between a plurality of said control groups, acquisition and exchange of information of respective control groups via said inter-group relay terminals, as well instructions and requests necessary for acquisition and exchange of said information can be performed.

A ninth aspect of the present invention is that, in the second aspect of the invention, between a plurality of said control groups, it is possible to arbitrarily modify the belonging destination of a terminal belonging to the respective control groups via said inter-group relay terminal.

A tenth aspect of the present invention is that, in the second aspect of the invention, a plurality of said control groups adopt a hierarchical structure, and said inter-group relay terminal belonging to said control group of a kth hierarchy (k: natural number) is made to belong to said control group of a (k + 1) th hierarchy.

An eleventh aspect of the present invention is that, in the second aspect of the invention, a plurality of said control groups adopt a hierarchical structure, and said control group of a kth hierarchy (k: natural number) provides a terminal belonging to said kth hierarchy control group as said inter-group relay terminal, for said control group of a (k+ 1) th hierarchy.

A twelfth aspect of the present invention is that, in the tenth aspect of the invention, said control group of a kth hierarchy provides independently or in response to a request from said control group of said (k+1) th hierarchy, a terminal belonging to said kth hierarchy control group, as said inter-group relay terminal.

A thirteenth aspect of the present invention is that, in the eleventh aspect of the invention, said control group of a kth hierarchy provides independently or in response to a request from said control group of said (k+1) th hierarchy, a terminal belonging to said kth hierarchy control group, as said inter-group relay terminal.

A fourteenth aspect of the present invention is that, in the tenth aspect of the invention, the terminal which is provided as said inter-group relay terminal, is selected based on processing ability of said terminal, or on a load condition of said terminal.

A fifteenth aspect of the present invention is that, in the eleventh aspect of the invention, in the terminal which is provided as said inter-group relay terminal, is selected based on processing ability of said terminal, or on a load condition of said terminal.

A sixteenth aspect of the present invention is that, in the first aspect of the invention, a plurality of said control groups adopts a hierarchical structure, and said control group of a kth hierarchy (k: natural number) belongs to a previously determined standby control group in the case where of said control groups of a (k+1) th hierarchy the control group immediately above itself disappears, and regarding said control group of a (k+2) th hierarchy, said standby control group participates in the case where the control group immediately below itself disappears, and said control group is incorporated as the control group of the (k+1) th hierarchy in the case where there is a control group standing by.

A seventeenth aspect of the present invention is that, in the tenth aspect of the invention, a plurality of said control groups adopts a hierarchical structure of an mth hierarchy and
the plurality of said control groups belonging to an nth hierarchy (1 < n <m), has the same hierarchy inter-group relay terminal which relays information between the other of said control groups within said nth hierarchy.

An eighteenth aspect of the present invention is that, in the tenth aspect of the invention, said hierarchical structure has a tree structure.

A nineteenth aspect of the present invention is that, in the eleventh aspect of the invention, said hierarchical structure has a tree structure.

A twentieth aspect of the present invention is that, in the sixteenth aspect of the invention, said hierarchical structure has a tree structure.

A twenty first aspect of the present invention is that, in the seventeenth aspect of the invention, said hierarchical structure has a tree structure.

A twenty second aspect of the present invention is that in the eighteenth through the twenty first aspect of the invention, a control group belonging to an uppermost hierarchy is singular.

A twenty third aspect of the present invention is that in the first aspect of the invention, said terminal when relaying said information within corresponding control groups, relays said information by simultaneous multicast transmission.

A twenty fourth aspect of the present invention is that in the first aspect of the invention, said control group is provided for a predetermined area of virtual reality which handles the application program.

A twenty fifth aspect of the present invention is that, in the second aspect of the invention, said relay terminal and said inter-group relay terminal notify each other of a list of a plurality of terminals belonging to a control group to which the respective relay terminals belong, and version information of said list.

A twenty sixth aspect of the present invention is that, in the second aspect of the invention, said inter-group relay terminal, in the case where normal communication is not occurring between other inter-group relay terminals, performs condition judgment communication in order to determine whether or not said other inter-group relay terminals are operating normally.

A twenty seventh aspect of the present invention is that, in the twenty sixth aspect of the invention, said condition judgment communication is performed, in the case where, of the plurality of said other inter-group relay terminals which become the object of said condition judgment communication, an inter group relay terminal not belonging to the upper hierarchy is not present, said condition judgment communication is prevented.

A twenty eighth aspect of the present invention is that in the control method for a computer system, with a plurality of terminals, mutually connected via network, and a plurality of control groups constructed from said plurality of terminals, said plurality of control groups controls such that said terminals arbitrarily belong to one or more of said control groups, and selects at least one terminal from of said plurality of control groups as a relay terminal which relays information within said one of control groups, and the one or more of said terminals in one control group of said plurality of control groups transmits information with the others of the control groups to share data each other, and, in the case where the number of said terminals belonging to said control group becomes less than a previously set minimum construction terminal number, said terminals belonging to another control group different from said control group or previously determined standby terminal which does not belong to any of the control groups are made to belong said control group.

A twenty ninth aspect of the present invention is that, in the twenty eighth aspect of the invention, the control, method for a computer system makes one or a plurality of relay terminals of said relay terminals function as an inter-group relay terminal which relays information between the other of said control groups.

A thirtieth aspect of the present invention is that in the twenty eighth aspect of the invention, the control method for a computer system makes said terminal participate with an arbitrary control group to which it belongs, or which disengages said terminal from an arbitrary control group to which it belongs.

A thirty first aspect of the present invention is that, in the twenty eighth aspect of the invention, the control method for a computer system shares information unique to said control group with said terminal belonging to one of said control groups.

A thirty second aspect of the present invention is that, in the thirty first aspect of the invention, after said control group has been once constructed, makes said terminal continue to maintain said unique information, until said control group disappears.

A thirty third aspect of the present invention is that, in the twenty ninth aspect of the invention, in said inter-group relay terminal, when exchange of information is performed between an information exchange source control group being a control group to which said inter-group relay terminal belongs, and an information exchange destination control group being another of said control groups, there is a control group other than said information exchange destination control group, and said method performs said information exchange via one or a plurality of control groups which are capable of communication with both of said information exchange source control group and said information exchange destination control group.

A thirty fourth aspect of the present invention is that, in the twenty ninth aspect of the invention, the control method for a computer system provides independently or in response to a request from another control group, a terminal belonging to respective control groups as said inter-group relay terminal

A thirty fifth aspect of the present invention is that, in the twenty ninth aspect of the invention, the control method for a computer system performs between a plurality of said control groups, acquisition and exchange of information of respective control groups via said inter-group relay terminals, as well as performing instructions and requests necessary for acquisition and exchange of said information

A thirty sixth aspect of the present invention is that, the control method for a computer system in the twenty ninth aspect of the invention, between a plurality of said control groups, arbitrarily modifies the belonging destination of a terminal belonging to the respective control groups via said inter-group relay terminal.

A thirty seventh aspect of the present invention is that, in the twenty ninth aspect of the invention, a plurality of said control groups adopt a hierarchical structure, and which makes said inter-group relay terminal belonging to said control group of a kth hierarchy (k: natural number) belong to said control group of a (k + 1) th hierarchy.

A thirty eighth aspect of the present invention is that, in the twenty ninth aspect of the invention, a plurality of said control groups adopt a hierarchical structure, and which provides for said control group of a kth hierarchy (k: natural number) a terminal belonging to said kth hierarchy control group as said inter-group relay terminal, for said control group of a (k+1) th hierarchy.

A thirty ninth aspect of the present invention is that, the control method for a computer system in the thirty seventh aspect of the present invention provides for said control group of a kth hierarchy, independently or in response to a request from said control group of said (k+1) th hierarchy, a terminal belonging to said kth hierarchy control group, as said inter-group relay terminal.

A fortieth aspect of the present invention is that in the thirty eighth aspect of the present invention, the control method for a computer system provides for said control group of a kth hierarchy, independently or in response to a request from said control group of said (k+1) th hierarchy, a terminal belonging to said kth hierarchy control group, as said inter-group relay terminal.

A forty first aspect of the present invention is that the control method for a computer system in the thirty seventh aspect of the present invention selects the terminal which is provided as said inter-group relay terminal, based on processing ability of said terminal, or on a load condition of said terminal.

A forty second aspect of the present invention is that, in the control method for a computer system in the twenty eighth aspect of the present invention, a plurality of said control groups adopts a hierarchical structure, which makes said control group of a kth hierarchy (k: natural number) belong to a previously determined standby control group in the case where of said control groups of the (k+1) th hierarchy the control group immediately above said kth hierarchy control group disappears, and for said control group of the (k+2) th hierarchy, makes said standby control group participate in the case where the control group immediately below said (k+2) th hierarchy control group disappears, and incorporates said standby control group as the control group of the (k+1) th hierarchy in the case where there is a control group standing by.

A forty third aspect of the present invention is that in the twenty eighth aspect of the present invention, a plurality of said control groups adopts a hierarchical structure of an mth hierarchy, which gives to the plurality of said control groups belonging to the nth hierarchy (1 <n<m), the same hierarchy inter-group relay terminal which relays shared information between the other of said control groups within said nth hierarchy

A forty fourth aspect of the present invention is that in the thirty seven to the forty third aspect of the present invention, said hierarchical structure has a tree structure.

A forty fifth aspect of the present invention is that in the forty forth aspect of the present invention, a control group belonging to an uppermost hierarchy is singular.

A forty sixth aspect of the present invention is that in the twenty eighth aspect of the present invention, when relaying said information within control groups corresponding to said terminal, performs relaying of said information by simultaneous multicast transmission.

A forty seventh aspect of the present invention is that in the twenty eighth aspect of the present invention, said control group is provided for a predetermined area of virtual reality which handles the application program.

A forty eighth aspect of the present invention is that in the twenty ninth aspect of the present invention, the control method for a computer system mutually notifies a list of a plurality of terminals belonging to a control group to which the respective relay terminals belong, and version information of said list, to said relay terminal and said inter-group relay terminal.

A forty ninth aspect of the present invention is that in the twenty ninth aspect of the present invention, the control method for a computer system performs position judgment on said inter-group relay terminal, in the case where normal communication is not occurring between other inter-group relay terminals, in order to determine whether or not said other inter-group relay terminals are operating normally.

A fiftieth aspect of the present invention is that the control method for a computer system in the forty ninth aspect of the invention, when said condition judgment communication is performed, in the case where, of the plurality of said other inter-group relay terminals which become the object of said condition judgment communication, an inter-group relay terminal not belonging to the upper hierarchy is not present, prevents said condition judgment communication.

A fifty first aspect of the present invention is that, in the recording medium recorded with a control program for terminals capable of constructing a computer system, by being mutually connected via a network, said control program constructs a plurality of control groups from said plurality of terminals such that said plurality of terminals arbitrarily belong to one or more of said control groups, and selects at least one terminal from said plurality of control groups as a relay terminal which relays information within said control group, and the one or more of said terminals in one control group of said plurality of control groups transmits information with the others of the control groups to share data with each other, and in that, in the case where the number of said terminals belonging to said control group becomes less than a previously set minimum construction terminal number, said terminals belonging to another control group different to said control group or previously determined standby terminal which does not belong to any of the control groups are made to belong said control group.

A fifty second aspect of the present invention is that in the fifty first aspect of the present invention, the recording medium recorded with a control program makes one or a plurality of relay terminals of said relay terminals function as in inter-group relay terminal which relays information between the other of said control groups.

A fifty third aspect of the present invention is that in the fifty first aspect of the present invention, the recording medium recorded with a control program makes said terminal participate with an arbitrary control group to which it belongs, or which disengages said terminal from an arbitrary control group to which it belongs.

A fifty fourth aspect of the present invention is that in the fifty first aspect of the present invention, the recording medium recorded with a control program makes said inter-group relay terminal belonging to said control group of a kth hierarchy (k: natural number) belong to said control group of a (k+1) th hierarchy.

A fifty fifth aspect of the present invention is that in the fifty first aspect of the present invention the recording medium recorded with a control program, after said control group has been once constructed, makes said terminal continue to maintain said unique information, until said control group disappears. A fifty sixth aspect of the present invention is that in the fifty second aspect of the present invention, the recording medium recorded with a control program, wherein in said inter-group relay terminal, when exchange of information is performed between an information exchange source control group being a control group to which said inter-group relay terminal belongs, and an information exchange destination control group being another of said control groups, there is a control group other than said information exchange destination control group, and said program performs said information exchange via one or a plurality of control groups which are capable of communication with both of said information exchange source control group and said information exchange destination control group.

A fifty seventh aspect of the present invention is that in the fifty second aspect of the present invention, the recording medium recorded with a control program selects the terminal which is provided as said inter-group relay terminal, based on processing ability of said terminal, or on a load condition of said terminal.

A fifty eighth aspect of the present invention is that in the fifty first aspect of the present invention, the recording medium recorded with control program which, in the case where the number of said terminal belonging to said control group becomes less than a previously set minimum construction terminal number, sets a previously determined standby terminal which does not belong to any of the control groups, so as to belong to said control group.

A fifty ninth aspect of the present invention is that in the fifty second aspect of the present invention, the recording medium recorded with a control program makes a plurality of said control groups a hierarchical structure, and provides from said control group of a kth hierarchy (k: natural number), a terminal belonging to said kth hierarchy control group as said inter-group relay terminal, for said control group of a (k+1) th hierarchy.

A sixtieth aspect of the present invention is that in the fifty ninth aspect of the present invention, the recording medium recorded with a control program which makes said control group of a kth hierarchy provide, independently or in response to a request from said control group of said (k+1) th hierarchy, a terminal belonging to said kth hierarchy control group, as said inter-group relay terminal.

A sixty first aspect of the present invention is that in the fifty first aspect of the present invention, the recording medium recorded with a control program makes a plurality of said control groups a hierarchical structure, and makes said control group of a kth hierarchy (k: natural number) belong to a previously determined standby control group in the case where of said control groups of a (k+1) th hierarchy the control group immediately above said kth hierarchy control group disappears, and makes said standby control group participate in said control group of a (k+2) th hierarchy, in the case where the control group immediately below the (k+2) th hierarchy control group disappears, and incorporates said standby control group as the control group of the (k+1) th hierarchy in the case where there is a control group standing by.

A sixty second aspect of the present invention is that in the fifty second aspect of the present invention, the recording medium recorded with a control program which makes said relay terminal and said inter-group relay terminal notify each other of a list of a plurality of terminals belonging to a control group to which the respective relay terminals belong, and version information of said list.
A sixty third aspect of the present invention is that in the fifty second aspect of the present invention, the recording medium recorded with a control program which makes said inter-group relay terminal, in the case where normal communication is not occurring between other inter-group relay terminals, perform condition judgment communication in order to determine whether or not said other inter-group relay terminals are operating normally.

A sixty fourth aspect of the present invention is that in the fifty sixth aspect of the present invention, the recording medium recorded with a control program which, when said condition judgment communication is performed, in the case where, of the plurality of said other inter-group relay terminals which become the object of said condition judgment communication, an inter-group relay terminal not belonging to the upper hierarchy is not present, prevents said condition judgment communication.

### BRIEF DESCRIPTION OF THE DRAWINGS

FIG. 1 shows a schematic configuration of a computer system of an embodiment.
FIG. 2 is an explanatory diagram of a connection condition of an area control group of a first embodiment.
FIG. 3 is an explanatory diagram (first) of a connection condition of a specific area control group according to the first embodiment.
FIG. 4 is an explanatory diagram (second) of a connection condition of a specific area control group according to the first embodiment.
FIG. 5 is an explanatory diagram (third) of a connection condition of a specific area control group according to the first embodiment.
FIG. 6 is a schematic function block diagram
FIG. 7 is a diagram for explaining a structure a shared information memory section.
FIG. 8 is a schematic block diagram of a terminal.
FIG. 9 is a sequence flow chart of a first embodiment.
FIG. 10 is an explanatory diagram of a connection condition of a

### second embodiment.

FIG. 11 is a more specific explanatory diagram of a connection condition of an area control group of the second embodiment.

### BEST MODE FOR CARRYING OUT THE INVENTION

Next is a description of preferred embodiments of the present invention with reference to the drawings.

### [A] First embodiment

At first is a description of a first embodiment of the present invention.

### 11] Constitution of the first embodiment

### [1.1] Schematic configuration of the computer system

### [1.1.1] Physical connection relation of the computer system

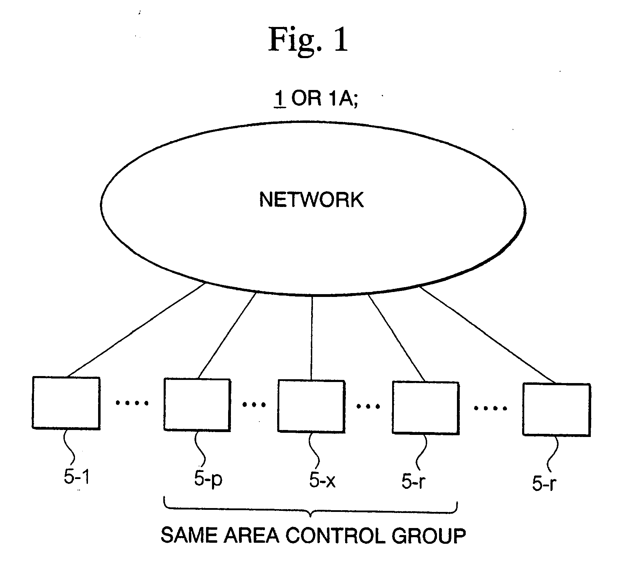

FIG. 1 shows a schematic configuration of a physical connection relation of a computer system 1 as a first embodiment.

As shown in FIG. 1, the computer system 1 is a computer system which executes an application of a multiplayer type. The computer system 1 is constituted by incorporating a plurality of terminals 5-1 to 5-n which are connected via a network.

Here, these plurality of terminals 5-1 to 5-n constitute control groups (area control groups). For instance, the entire virtual space in a role playing game being an application of a multiplayer type, is multiply divided, and the obtained virtual spaces are made divided virtual space (areas). Then the plurality of terminals 5-1 to 5-n constitute control groups (area control groups) for these divided virtual space units.

In this case the area, being the divided virtual space, is defined to be a region on the virtual space in which "change of scene", which is caused by movement of objects in an application program, has an influence on other objects. Then each object which belongs to the same area, shares information by simultaneous multicast transmission or the like.

As a result, a "change of scene" caused by an object which belongs to the same area is transmitted to other objects.

The terminal 5-x (1 ≤ x ≤ n) stores as shared data which is shared between each terminal 5-p to 5-r inside an area control group, the information related to each terminal 5-p to 5-r (1 ≤ p ≤ x ≤ r ≤ n, p ≠ r) which belongs to the same area control group, and the information related to virtual position, attribute, etc. on the game in which each terminal 5-1 to 5-n participates.

Furthermore, the terminal 5-x also functions as an inter-group relay terminal. That is, it transmits update information produced by updating shared data, to the terminal 5-y which belongs to another group.

In this case, the inter-group relay terminal interchanges data directly between two area control groups. Furthermore, the inter-group relay terminal can also interchange data directly via single or plural area control groups which are able to communicate in common with each other.

Moreover the terminal 5-x also functions as a relay terminal which relays information inside the area control group to which the terminal 5-x belongs. Furthermore, it simultaneously transmits the update information to all other terminals of 5-p to 5-r in the same area control group.

As a result, consistency of the data shared between the respective terminals 5 is maintained by updating the shared data at each terminal 5-p to 5-r which receives the update information.

Furthermore, the terminal which functions as a relay terminal and an inter-group relay terminal, maintains the information unique to the control group (shared data for instance) until the corresponding control group disappears.

In these cases, the area control group to which the respective terminals 5-1 to 5-n belong, can be arbitrarily selected, and it is also possible for one terminal to belong to a plurality of area control groups. Furthermore, the respective terminals 5-1 to 5-n can be disengaged from an optional area control group to which it belongs.

Moreover, between the respective area control groups it is also possible to change the affiliation of optional terminals which are under control.

### [1.1.2] Logical connection relation between area control groups

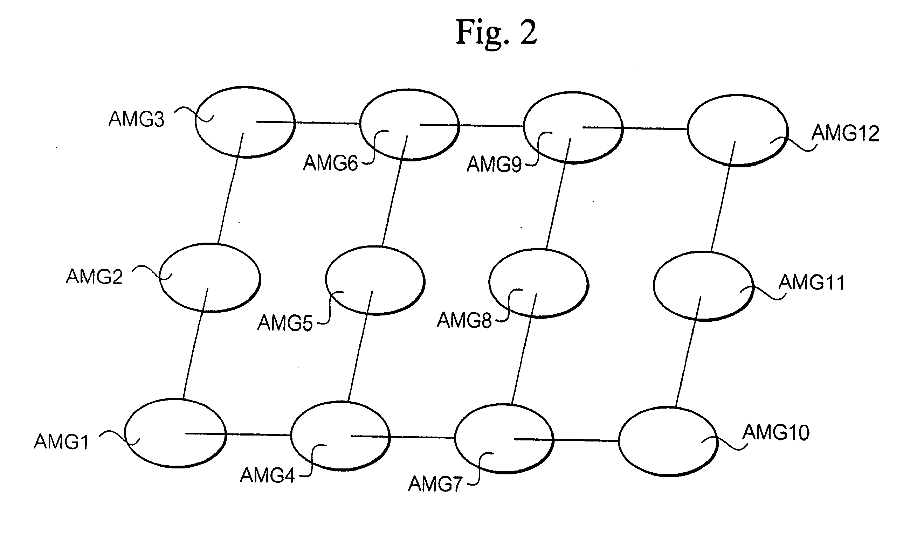

A logical connection relation between area control groups which constitute the computer system 1, adopts a mesh structure as shown in FIG. 2, in the first embodiment. In the following description, in order to simplify explanation, a case where the computer system 1 is constituted by 12 area control groups is described.

The computer system 1 is constituted by area control groups AMG 1 to AMG 12. The respective area control groups AMG 1 to AMG 12 are connected together by a logical mesh structure.

In this case inter-group relay terminals exist in each of the area control groups AMG 1 to AMG 12, to interchange member lists or the like between the area control groups.

The respective area control groups AMG 1 to AMG 12 are not completely independent of each other. That is, there is also the case where one terminal belongs to a plurality of area control groups.

### [1. 1. 3] Connection relation of respective terminals in an area control group

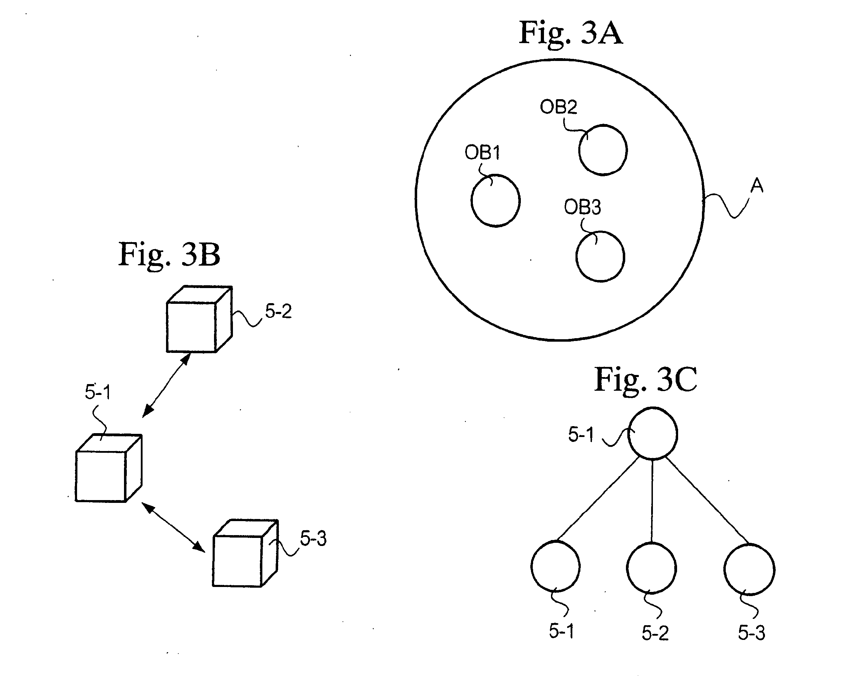

Next is a description of the physical and logical connection relation of the terminals which constitute the respective area control groups, with reference to FIG. 3.

### [1. 1. 3. 1] Case of one relay terminal

At first is a description of a one relay terminal case, with reference to FIG. 3.

In the following description, a case with three terminals corresponding to a certain area A, is explained as an example.

As shown in the FIG. 3 (a), objects belonging to an area A, which is an area in virtual space on a game application, are the objects OB 1 to OB 3. Moreover, the terminals which respectively correspond to each object OB 1 to OB 3, are terminals 5-1 to 5-3.

The terminal 5-1 has the function of a relay terminal.

In this case, for example the physical connection relation of the terminals 5-1 to 5-3, is as shown in FIG. 3 (b).

Moreover, the logical connection relation of the terminals 5-1 to 5-3, as shown in the FIG. 3 (c), adopts a hierarchical structure with the terminal 5-1 to 5-3 connected under the terminal 5-1 which functions as a server computer and a relay terminal.

As a result, the terminal 5-2 and the terminal 5-3, when the corresponding object OB 2 and object OB 3 are moved, respectively transmit this movement to the terminal 5-1 via the network.

At this time, the terminal 5-1 also functions as a server computer as heretofore, and computes the "change of scene" attributable to the movement of the objects OB 1 to OB 3. Then the terminal 5-1 updates the shared information of the terminals 5-1 to 5-3 which are logically connected.

### [1. 1. 3. 2] Case of multiple relay terminals

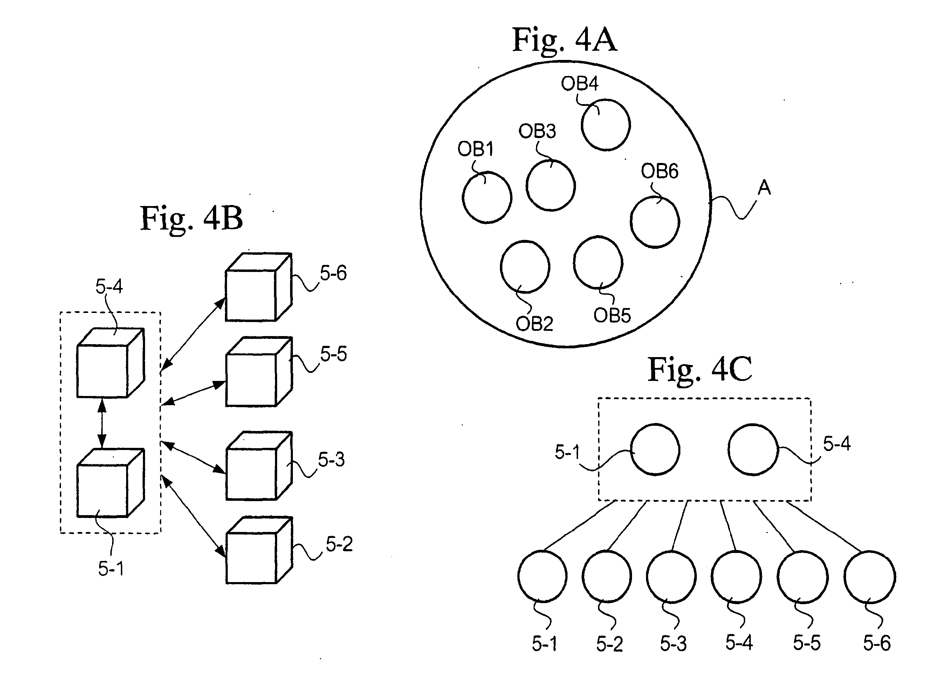

Next is a description of a multiple relay terminal case, with reference to FIG. 4.

In the following description, a case with six terminals corresponding to a certain area A, is explained as an example.

As shown in the FIG. 4 (a), objects belonging to an area A, which is an area in virtual space on a game application state, are the objects OB 1 to OB 6. The terminals which respectively correspond to each object OB 1 to OB 6, are the terminals 5-1 to 5-6. The terminal 5-1 and the terminal 5-4 have the function of relay terminals.

In this case, for example the physical connection relation of the terminals 5-1 to 5-6, is as shown in FIG. 4 (b).

That is, under the terminal 5-1, the terminals 5-2 and 5-3 are connected via the network. Moreover, under the terminal 5-4, the terminals 5-5 and 5-6 are connected via the network.

Moreover, the logical connection relation of the terminals 5-1 to 5-6, as shown in the FIG. 4 (c), adopts a hierarchical structure with the terminal 5-1 to 5-6 connected under the terminal 5-1 and the terminal 5-4 which function as a server computer and a relay terminal. In this case the terminal 5-1 and the terminal 5-4 appear to function as a single relay terminal.

As a result, the terminal 5-2 and the terminal 5-3, when the corresponding object OB 2 and object OB 3 are moved, respectively transmit this movement to the terminal 5-1 via the network.

Moreover, the terminal 5-5 and the terminal 5-6, when the corresponding object OB 5 and object OB 6 are moved, respectively transmit this movement to the terminal 5-4 via the network.

As a result, the terminal 5-1 and the terminal 5-4 also functions as a server computer as heretofore, and compute the "change of scene" attributable to the movement of the objects OB 1 to OB 6. Then the terminal 5-1 and the terminal 5-4 update the shared information of the terminals 5-1 to 5-6 which are logically connected.

### [1. 1. 3. 3] Case where the relay terminal uses a plurality of standby terminals

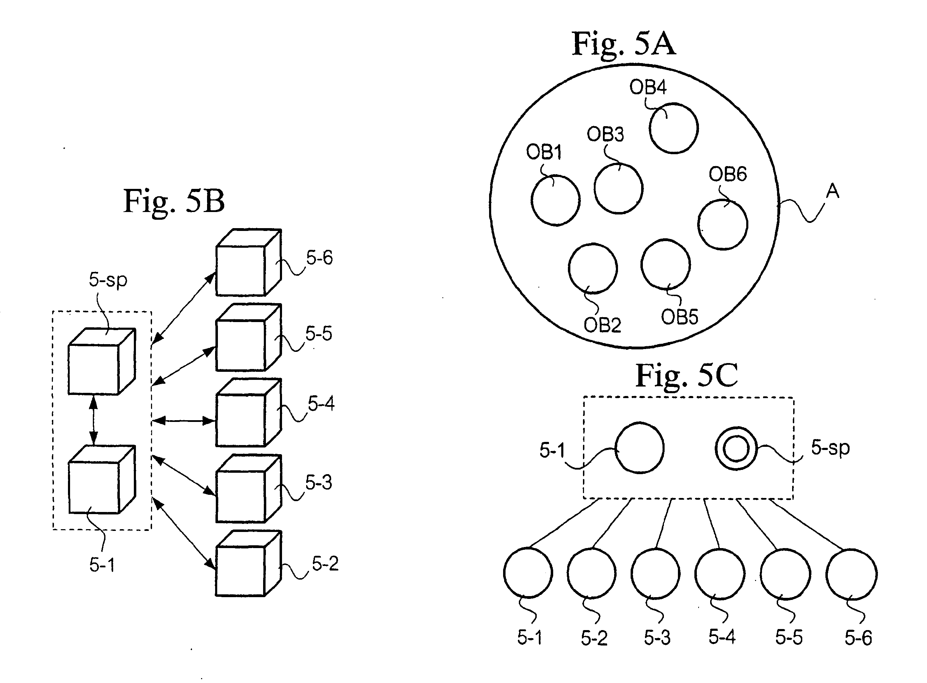

To continue, a case where the relay terminal uses a plurality of standby terminals will be described with reference to FIG. 5.

In the case where the relay terminals are several units and a plurality of standby terminals are used, then of the terminals constituting the area control group, there is the case where the processing capability or the load of the terminals other than the terminals which are already determined to function as relay terminals, is not sufficient to enable functioning as relay terminals. That is, in a situation where a previously determined criteria is not reached, there is the case where it is necessary to provide standby terminals furnished by a software vendor or the like.

In the following description, a case with six terminals corresponding to a certain area A, is explained as an example.

As shown in the FIG. 5 (a), objects belonging to an area A, which is an area in virtual space on a game application, are the objects OB 1 to OB 6. Moreover, the terminals which respectively correspond to each object OB 1 to OB 6, are the terminals 5-1 to 5-6, and the terminal 5-1 and a standby terminal 5-SP have the function of relay terminals. Furthermore, the terminal 5-1 and the standby terminal 5-SP appear to function as one relay terminal.

In this case, for example the physical connection relation of the terminals 5-1 to 5-6 and the standby terminal 5-SP, is as shown in FIG. 5 (b).

That is, under the terminal 5-1, the terminals 5-2 and 5-3 are connected via the network. Moreover, under the standby terminal 5-SP, the terminals 5-4, 5-5 and 5-6 are connected via the network.

Moreover, the logical connection relation of the terminals 5-1 to 5-6, as shown in the FIG. 5 (c), adopts a hierarchical structure with the terminal 5-1 to 5-6 connected under the terminal 5-1 and the terminal 5-4 which function as the server computer and the relay terminal.

As a result, the terminal 5-2 and the terminal 5-3, when the corresponding object OB 2 and object OB 3 are moved, respectively transmit this movement to the terminal 5-1 via the network.

Moreover, the terminal 5-4, the terminal 5-5 and the terminal 5-6, when the corresponding object OB 4, object OB 5 and object OB 6 are moved, respectively transmit this movement to the standby terminal 5-SP via the network.

As a result, the terminal 5-1 and the standby terminal 5-SP also functions as a server computer as heretofore, and compute the "change of scene" attributable to the movement of the objects OB 1 to OB 6, and the shared information of the terminals 5-1 to 5-6 which are logically connected.

### [1. 2] Structure of the terminal

The terminal 5-x to constitute the computer system 1 is detailed below.

### [1. 2. 1] Schematic structure of terminal

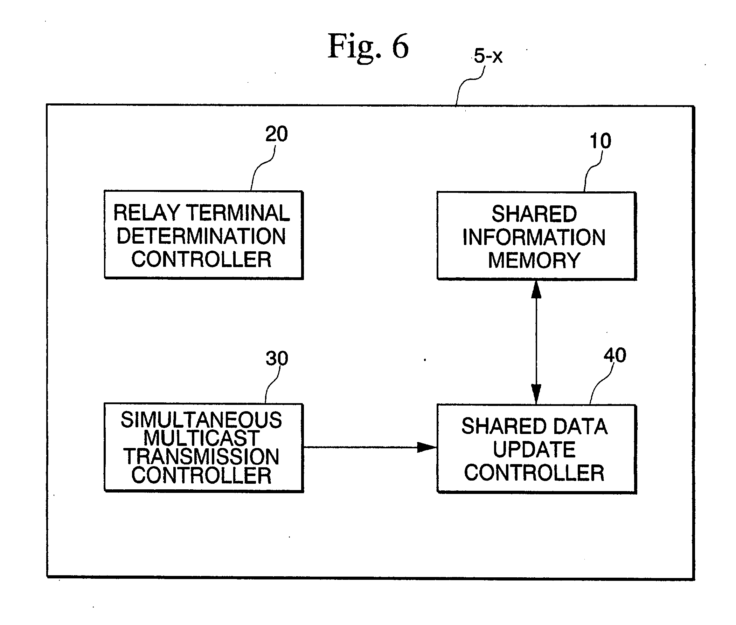

The schematic structure of the terminal 5-x, is described with reference to FIG. 6.

As shown in the FIG. 6, the terminal 5-x comprises, when roughly divided, a shared information memory 10, a relay terminal determination controller 20, a simultaneous multicast transmission controller 30 and a shared data update controller 40.

The shared information memory 10 stores the shared data which is shared between respective terminals 5 in an area control group.

The relay terminal determination controller 20, in the case where updating of shared data occurs, determines the relay terminal which simultaneously transmits the update information related to the updating, to all other terminals 5 in the same area control group.

The simultaneous multicast transmission controller 30, when functioning itself as a relay terminal, controls the simultaneous multicast transmission of update information to the other terminals in the group. Furthermore, the simultaneous multicast transmission controller 30, when functioning itself as an inter-group relay terminal, controls transmission and reception between the inter-group relay terminals of the other area control groups.

The shared data update controller 40 controls the updating of shared data.

### [1. 2. 1. 1] Schematic configuration of shared information memory

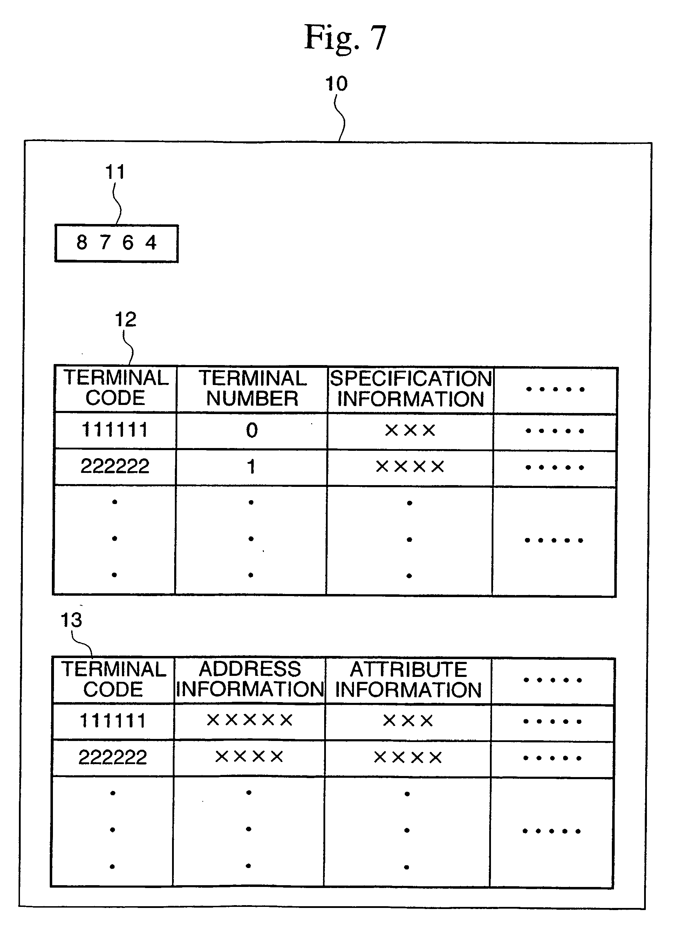

Next is a description of the schematic configuration of the shared information memory 10, with reference to FIG. 7.

The shared information memory 10 is rewritable memory which stores shared data which is shared between respective terminals 5 in the group. The shared data includes; version data 11 which shows the version of the shared data, member data 12 and basic data 13, which are the data related to respective terminals belonging to the area control group which corresponds to this terminal 5-x.

Here, the version data 11 is the data which shows the update version of the member data 12 and the basic data 13. A "1" is added each time updating is performed.

Moreover, the member data 12 is the information related to the respective terminals 5 belonging to the same group. For instance, this is data which stores, terminal identification codes, terminal numbers for relay terminal determination (hereunder called terminal numbers), specification information of terminals, and so on.

In this case, for the terminal number, for example when three terminals belong inside a group, one of the numbers of "0", "1" and "2" is assigned to respective terminals to avoid duplicating.

Regarding the terminal number, when a terminal is entered into or removed from an area control group so that the terminal numbers of the area control group are increased or decreased, the terminal which recognizes the increase or decrease notifies a predetermined terminal to that effect. Then the terminal which receives the notification, requests simultaneous multicast transmission to the relay terminals to thereby effect updating.

More specifically, the terminal which recognizes the increase of decrease of the terminal number, transmits this information to the terminal which corresponds to the terminal identification code registered at the very start of the respective terminal identification codes stored in the member table 12. The terminal, which receives this information, requests simultaneous multicast transmission to the relay terminals as updating information of the member list. Then by means of the simultaneous multicast transmission, the terminal number is finally updated.

Moreover, in the specification information of the terminal is stored; capacities of a hard disk and a memory, CPU performance, communication speed of the network to which the terminals connect, and so on.

Regarding the specification information, the respective terminals transmit specification information periodically to the terminal which corresponds to the terminal identification code registered for instance at the very start of the respective terminal identification codes stored in the member table 12. Then the terminal, which receives the specification information, requests simultaneous multicast transmission to the relay terminals as the updated information of a member list to thereby finally effect update.

Furthermore, the basic data 13 is data which stores the information related to an virtual position, an attribute, etc. on a game for the terminals 5-p to 5-r which correspond to the respective terminal identification codes which are stored in the member data 12.

### [1. 2. 1. 2] Relay terminal determination controller

Next is a description of the relay terminal determination controller 20.

The relay terminal determination controller 20 determines a predetermined relay terminal for simultaneous multicast transmission when updating of shared data occurs. That is, the relay terminal determination controller 20 determines, base on a predetermined algorithm, the relay terminal for simultaneous multicast transmitting updated information related to this updating, to all the other terminals 5 in the same area control group.

This algorithm is one which determines one or a plurality of terminals as a relay terminal from the terminals 5-p to 5-r in the same area control group. For this algorithm, it is sufficient if this is one which, at the time of determining the relay terminal, can make this determination without excessively increasing the processing load on the terminal, compared to the processing ability of the respective terminals corresponding to the specification information of the member data 11.

### [1. 2. 1. 3] Simultaneous multicast transmission controller

Next is a description of the simultaneous multicast transmission controller 30.

The simultaneous multicast transmission controller 30, in the case where the terminal functions as a relay terminal, simultaneously transmits update information to the other terminals in the same area control group. Alternatively, the simultaneous multicast transmission controller 30 transmits to the other terminals in the same area control group which are assigned to perform simultaneous multicast transmission.

The simultaneous multicast transmission controller 30, when not functioning as a relay terminal, requests transmission to the relay terminals when information updating occurs.

### [1. 2. 1. 4] Shared data updating controller

Next, the shared data update controller 40 controls update processing such as registration, renewal and deletion of the shared data which are stored in the shared information memory.

Moreover, the shared data update controller 40 updates the shared data with the update information, in the case where the version data transmitted by the simultaneous multicast transmission corresponds to a newer version than the version data stored in the shared information memory 10.

### [1. 2. 2] Terminal hardware configuration

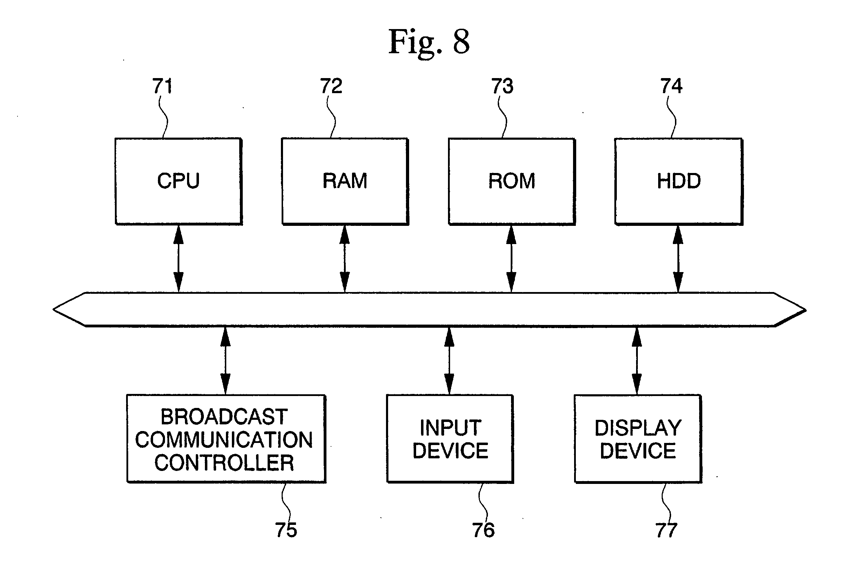

The hardware configuration of the terminal 5-x is explained with reference to FIG. 8.

As shown in FIG. 8, the terminal 5-x comprises for example; a central processing unit (CPU) 71, a read only memory unit (ROM) 73, a main memory device (RAM) 72, an auxiliary storage (HDD) 74, a communication controller 75, an input device 76 and a display device 77.

Furthermore, the CPU 71, RAM 72, ROM 73, HDD 74, communication controller 75, input device 76 and display device 77 are connected to each other via a bus 78.

The central processing unit (CPU) 71 performs generalization of the computational processing, controlling processing, and so on.

The read only memory (ROM) 73 stores various kinds of control programs.

The main memory device (RAM) 72 temporarily stores operating programs, data, and the like.

The auxiliary storage (HDD) 74 stores programs and the like for controlling the abovementioned simultaneous multicast transmission request controller 20, the simultaneous multicast transmission controller 30, the shared data update controller 40, the download controller 50, the relay sending controller 60, and so on.

The communication controller 75 becomes a connection interface for when connecting to other terminals via the network.

The input device 76 inputs various data.

The display device 77 displays processing results and the like.

The auxiliary storage 74 may be installed inside or outside the terminals 5.

The auxiliary storage 74 need not be provided for all the terminals 5. Moreover, instead of the auxiliary storage 74, a device for reading a recording medium, such as a CD-ROM device and a DVD-ROM device may be provided. In this case the CD-ROM device and the DVD-ROM device read a CD or a DVD on which is stored a program for controlling the above mentioned simultaneous multicast transmission request controller 20, simultaneous multicast transmission controller 30, shared data update controller 40, download controller 50, relay sending controller 60, and so on.

It is not really necessary to provide the input device 76 and the display device 77 inside the terminal 5. For example, in the case where one terminal belongs to a plurality of groups at the same time, one terminal logically functions as a plurality of terminals. Therefore, in the case where, in a logical terminal which belongs to a certain group, the input device 76 and the output device 77 are physically occupied, there is also the condition in the other logical terminal where the input device 76 and the output device 77 are not provided.

### [2] Operation of the First Embodiment

### [2. 1] Basic operation of simultaneous multicast transmission

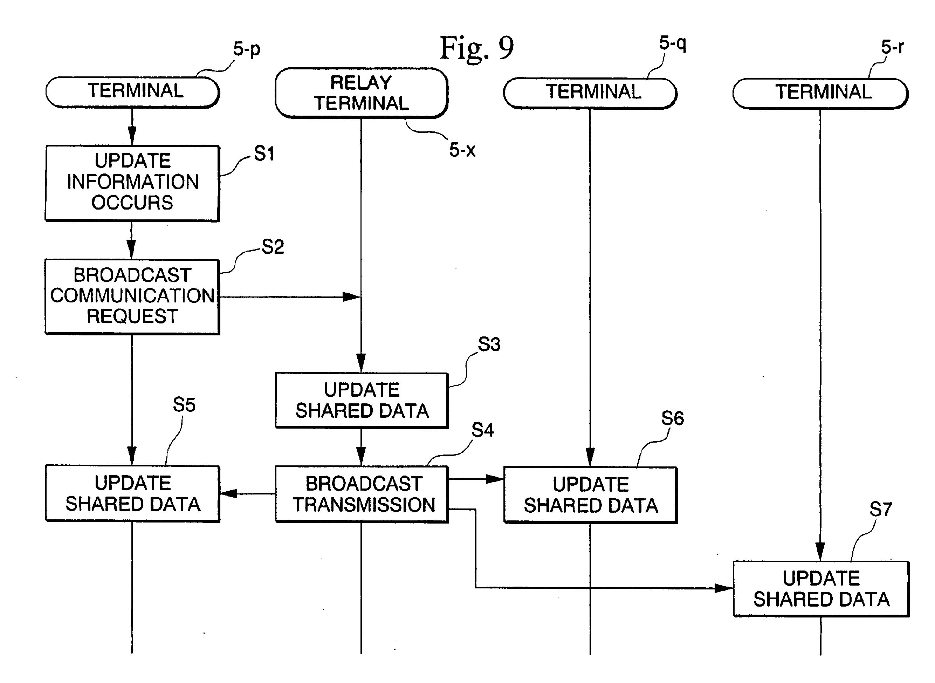

Next is a description of a basic operation example of simultaneous multicast transmission, with reference FIG. 9.

For example, in the case where updating of the shared data in the terminal 5-p occurs (step S1), the simultaneous multicast transmission controller 30 of the terminal 5-p sends a simultaneous multicast transmission request signal which requests sending update information X produced by updating the shared data and simultaneous multicast transmission, to the terminal 5-x being the relay terminal (step S2).

As a result, the terminal 5-x being the relay terminal, updates the memory information of the shared information memory 10 based on the update information X (step S3).

Next, the simultaneous multicast transmission controller 30 of the terminal 5-x simultaneously transmits the update information X to the terminals 5-p to 5-r excluding itself (step S4).

As a result the shared data update controller 40 of the terminals 5-p to 5-r excluding the terminal 5-x which functions as the relay terminal, updates the information memorized in the respective shared information memories 10, based on the update information X received from the terminal 5-x (steps S5, S6 and S7).

Furthermore, in the case where the terminal 5-x being the relay terminal functions as an inter-group relay terminal, the update information X is sent to the inter-group relay terminal belonging to other area control group.

### [2. 2] Health check function

Incidentally, in the above description it was assumed that the terminals were those having high reliability. However in practice, since it cannot be assumed that the respective terminals 5-1 to 5-n are reliable, it is necessary to check whether or not each terminal is operating normally.

Such a function is defined as a health check function in this embodiment. As an abnormal condition, there is for example the terminal power being off, or a communication line being disconnected, or problems or failures attributable to restrictions on resources of the computer constituting the terminal, such as memory over flow and the like.

The health check is performed periodically between the terminals in the same area control group. Then a terminal found to be abnormal as a result of the health check is removed from the area control group. After this the member list of the area control group is updated.

### [3] Effect of the first embodiment

As described above, according to the first embodiment, the conventional functions of the server computer are distributed to the respective terminals. Thus "change of scene" attributable to movement of the object can be transferred to the other terminals belonging to the same area.

As a result, according to the first embodiment, functions equivalent to with the conventional server client method can be realized. Furthermore, according to the first embodiment, processing can be performed efficiently for the whole computer system, corresponding easily even to new entry and secession from the computer system 1, of a terminal.

### [B] Second embodiment

In the abovementioned first embodiment, the case was described where the logical connection relation between the area control groups constituting the computer system adopted a mesh structure.

The second embodiment on the other hand, compared to the first embodiment, is an embodiment of the case where the logical connection relation between the area control groups constituting the computer system has a hierarchical structure.

### [1] Logical connection relation between area control groups

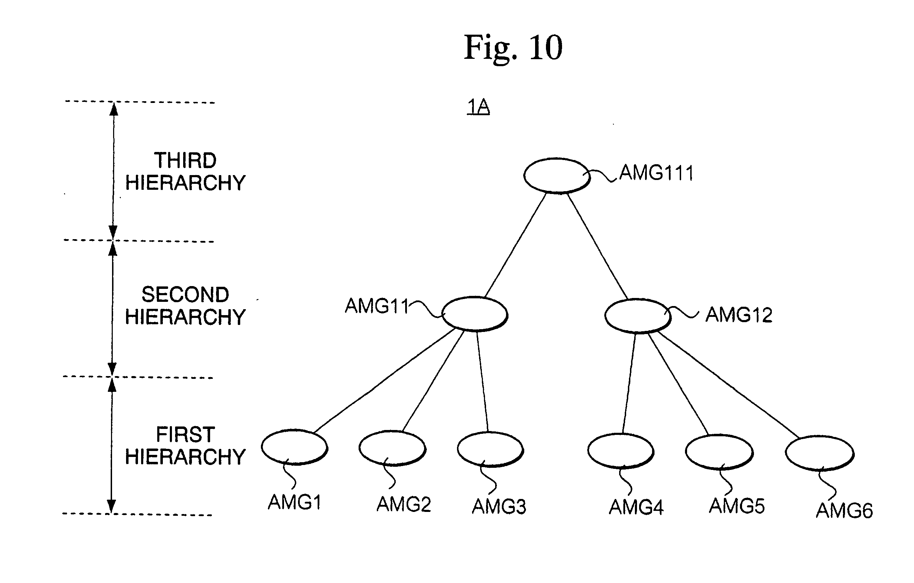

The logical connection relation between the area control groups which constitute the computer system 1A, adopts a hierarchical structure (hierarchy) in this second embodiment. In the following description, to simplify the explanation, the case where the computer system 1A is constituted by six area control groups is explained with reference to FIG. 10.

The computer system 1A comprises the area control groups of AMG 1 to AMG 6. The area control groups AMG 1 to AMG 3 belong to a second hierarchical area control group AMG 11 being a higher rank. The area control groups AMG 4 to AMG 6 belong to a second hierarchical area control group AMG 12 being a higher rank.

Furthermore, the second hierarchical area control groups AMG 11 and AMG 12 belong to a third hierarchical area control group AMG 111.

In this case, the higher rank hierarchical area control group includes the terminal belonging to the lower rank hierarchical area control group which belongs to this area control group, as an inter-group relay terminal.

Moreover, the highest rank hierarchical area control group (the third rank hierarchical area control group AMG 111 in this embodiment) is only one.

More specifically, a terminal which belongs to at least one of the area control groups AMG 1 to AMG 3, is included in the second hierarchical area control group AMG 11 as a group relay terminal. Furthermore, the terminal which belongs to at least one of the area control groups AMG 4 to AMG 6, is included in the second hierarchical area control group AMG 12 as a group relay terminal. Moreover, the inter-group relay terminal which belongs to the second hierarchical area control group AMG 11 or the second hierarchical area control group AMG 12, is included in the third hierarchical area control group AMG 111 as a group relay terminal which performs a relay operation between the upper rank second hierarchical area control groups.

The logical connection relation of these area control groups adopts a hierarchical structure.

In this case the respective area control groups AMG 1 to AMG 6 are not completely independent from each other, there being the case where one terminal belongs to plurality of area control groups.

### [2] Connection relation of terminals in an area control group

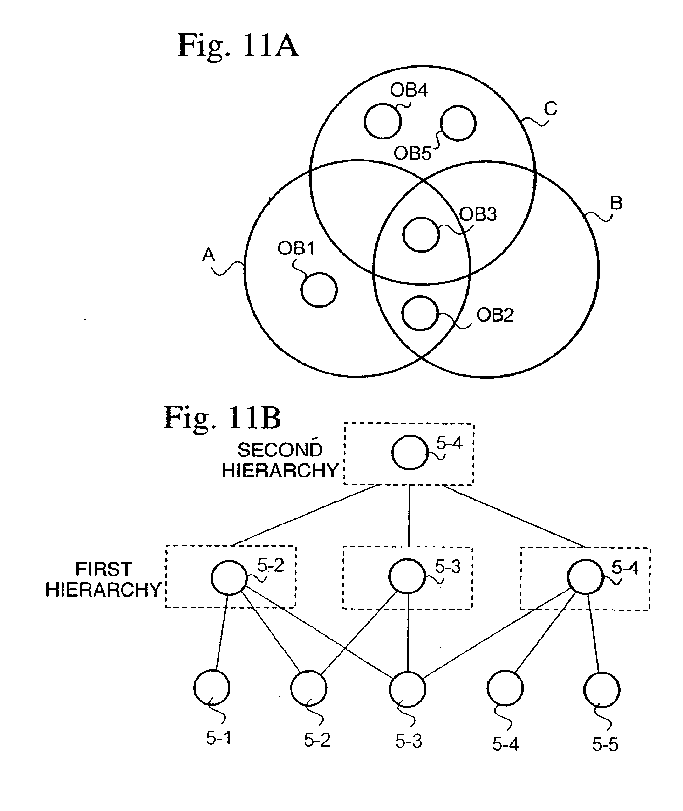

Next is a description of the logical connection relation of terminals which constitute respective area control groups, with reference to FIG. 11.

In the following description, as shown in the FIG. 11 (a), the case where three terminals correspond to a certain area A, two terminals correspond to an area B and three terminals correspond to an area C is described as an example.

As shown in FIGS. 11 (a) and (b), the objects belonging to the area A, being one area in the virtual space on a game application, are the objects OB 1 to OB 3, and the terminals respectively corresponding to the objects OB 1 to OB 3, are the terminals 5-1 to 5-3. The terminal 5-2 has a function as a relay terminal. A hierarchical structure is adopted where the terminals 5-1 to 5-3 are connected in a lower rank of the terminal 5-2.

Moreover, as shown in the FIGS. 11 (a) and (b), the objects belonging to the area B are the objects OB 2 and OB 3. In addition, the terminals respectively corresponding to the objects OB 2 and OB 3, are the terminals 5-2 and 5-3. Furthermore, the terminal 5-3 has the function of a relay terminal. A hierarchical structure is adopted where the terminals 5-2 and 5-3 are connected in a lower rank of the terminal 5-3.

Furthermore, as shown in the FIGS. 11 (a) and (b), the objects belonging to the area C are the objects OB 3 to OB 4. In addition, the terminals respectively corresponding to the objects OB 3 to OB 5, are the terminal 5-3 to 5-5. Furthermore, the terminal 5-4 has the function of a relay terminal, and a hierarchical structure is adopted where the terminals 5-3 to 5-5 are connected in a lower rank of the terminal 5-4.

Furthermore, the terminal 5-4 has the function of an inter-group relay terminal for relaying between the areas. Then a hierarchical structure is adopted where the terminals 5-2 to 5-4 are connected in a lower rank of the terminal 5-4.

By means of the above construction, the terminal 5-1 to 5-3, when the corresponding objects OB 1 to OB 3 are moved, transmit the movement respectively to the terminal 5-2 via the network.

As a result, the terminal 5-2 also functions as a server computer as heretofore. That is, it computes the "change of scene" attributable to the movement of the objects OB 1 to OB 3, and notifies the computation result to the terminal 5-4.

Similarly, the terminals 5-2 and 5-3, when the corresponding objects OB 2 and OB 3 are moved, transmit the movement respectively to the terminal 5-3 via the network.

As a result, the terminal 5-3 also functions as a server computer as heretofore. That is, it computes the "change of scene" attributable to the movement of the objects OB 2 and OB 3, and notifies the computation result to the terminal 5-4.

Moreover, the terminals 5-3 to 5-5, when the corresponding objects OB 3 to OB 5 are moved, transmit the movement respectively to the terminal 5-4 via the network.

As a result, the terminal 5-4 also functions as a server computer as heretofore. That is, it computes the "change of scene" attributable to the movement of the objects OB 3 to OB 5, and notifies the computation result to the terminal 5-4.

Thus, the result is that the terminal 5-4 updates the shared information of the terminals 5-1 to 5-5 which are logically connected in the lower rank hierarchy.

In this case, the member data 12 (refer to FIG. 7) of the different hierarchy area control groups, is interchanged together with the version data 11 (refer to FIG. 7):
- at each inter-group relay processing (message communication),
- when the terminal (the member) belonging to the area control group is updated, and
- periodically.

As a result, by maintaining the member data in the latest condition, then even if a part of a terminal secedes suddenly from the area control group for some reason, the shared information can be maintained by means of the remaining terminals.

### [3] Effect of the second embodiment

As described above, according to the second embodiment, the area control group is made a hierarchical structure, and relaying of shared information between the lower hierarchies is performed in the terminal belonging to the higher hierarchy. Therefore an increase in the traffic related to simultaneous multicast transmission can be suppressed, enabling efficient control. Furthermore in the computer system for performing distributed processing, consistency of the shared information stored in the respective terminals can be achieved while lightening the processing load in the respective terminals.

### [4] Modified example of the second embodiment

In the above description, the explanation is for the case having a tree structure as the hierarchical structure. However it is not really necessary to have a tree structure. Furthermore, the number of area control groups of the highest rank is not limited to one, and a construction with several is also possible.

### [C] Modified examples of the embodiments

### [4.1] First modified example

In the above mentioned embodiments all of the terminals in the area control group become objects of the relay terminal. However it is not always necessary to make all the terminals the object of the relay terminal or the inter-group relay terminal. For example, a predetermined reference value may be set in the specification information of the member data. Then only the terminals which exceed this set reference value may be made the objects for the relay terminal or inter-group relay terminal. As a result, it becomes possible to exclude the terminals which have poor processing ability, from the objects of the relay terminal or the inter-group relay terminal.

In this case, it is also possible to construct this so that the reference value for the relay terminal and the reference value for the inter-group relay terminal are different.

In the case where inside one area control group, all the terminals are lower than the predetermined reference value (low processing ability), it is necessary to have a construction which recruits from the other area control groups, and forcibly assigns any of the terminals.

### [4. 2] Second modified example

The above embodiments are for the case where one application program is executed, and the situation where a plurality of areas are provided is described. However, in the case where a plurality of applications are simultaneously executed on one computer system, the areas may be made different for each of the application programs to constitute area control groups for each application program. For example, as the plurality of applications, there is; role playing games, simulation games, shooting games, and the like.

In this case, in a specific application program, in the situation where it appears that the number of terminals constituting the area control group will be lower than a prescribed value, a construction is possible where the terminal of an area control group corresponding to another application program, is used.

### [4. 3] Third modified example

In the above mentioned second embodiment, the description was for the case of a two layer hierarchy for the area control group. However it is also possible to constitute this with an arbitrary number of hierarchies. If the total number of terminals constituting the computer system is small, then a two layer hierarchy is sufficient.

In this case the first hierarchy area control group can be set so as to exist from the beginning. Alternatively, when an object first appears in an area inside a certain virtual space, this is created on the terminal (computer) for processing the object. Then the area control group is maintained until the end of the application program.

Moreover, regarding an area control group of a hierarchy of two or more, this can be set so as to exist from the beginning. Alternatively, area control groups of the immediately lower hierarchy are multiply produced, and are created in the case where the necessity arises to communicate between these area control groups of the immediately lower hierarchy.

### [4. 4] Fourth modified example

In the above description, the mesh structure area control group and the hierarchical structure area control group were described as being separate. However, it is also possible to construct the area control groups so as to have both structures.

### [4. 5] Fifth modified example

In the second embodiment, no consideration was given to the case where area control groups of a midway hierarchy of the hierarchical structure disappear.

To address this, the fifth modified example is constructed so that the area control group in a kth hierarchy (k: natural number) belongs to a previously determined standby area control group, in the case where, of the area control groups of (k+1) th hierarchy, the area control group immediately therebelow disappears.

Moreover, regarding the (k+2) th hierarchy area control group of a higher rank hierarchy, in the case where the area control group immediately therebelow disappears, this refers to a standby area control group. Then the (k+2) th hierarchy area control group, in the case where the standby area control group exists, can also be combined together as the (k+1) th hierarchy area control group or the k th hierarchy area control group.

As a result, according to the fifth modified example, the condition where an upper area control group does not exist, can be kept from continuing for too long. Consequently, according to the fifth modified example, the consistency of the shared information can be reliably achieved.

### [4. 6] Sixth modified example

In the above description, it was stated that for the terminal, a so called computer (including a personal computer, workstation and the like) was provided.

However, for the terminal applicable to this invention, this may include a dedicated game terminal, or optional electronic calculator hardware such as mobile type information devices including for example, a cellular phone, a PDA (Personal Digital Apparatus) or the like.

### [4. 7] Seventh modified example

In the above description, no precise definition was given regarding the area constituting virtual space.

However, regarding the definition of the area constituting virtual space, this can be arbitrarily defined for each application program.

In short, provided that between objects belonging to the same area, there is a condition where information related to the same area is shared, then this may be arbitrarily defined.

### [5] Effects of the embodiments

As described above, according to the embodiments, in a computer system which performs distributed processing, it is possible to provide a computer system, a computer system control method, and a recording medium, whereby consistency of the shared information stored in the respective terminals can be achieved while lightening the processing load in the respective terminals.

## Claims

1. A computer system with a plurality of terminals (5-n) mutually connected via network (1), and a plurality of control groups (AMG-n) constructed from said plurality of terminals (5-n) **characterized in that** the construction is such that said terminals (5-n) arbitrarily belong to one or more of said control groups (AMG-n), one or more of terminals (5-n) within the plurality of said terminals (5-ₙ) relay information within one of said control groups. (AMG-n), and said one or more of terminals (5-n) in one of said control groups (AMG-n) transmit information with the others of said plurality of control groups (AMG-n to share data each other, and **in that**
in the case where the number of said terminals (5-n) belonging to said control group (AMG-n) becomes less than a previously set minimum construction terminal number, said terminals (5-n) belonging to another control group (AMG-n) different from said control group (AMG-n) or a previously determined standby terminal (5-n) which does not belong to any of the control groups (AMG-n) are made to belong to said control group (AMG-n).

2. A computer system according to claim 1, wherein one or a plurality of relay terminals of said relay terminals function as an inter-group relay terminal which relays information between the other of said control groups.

3. A computer system according to claim 1, wherein said terminals can participate with an arbitrary control group to which it belongs, or can disengage from an arbitrary control group to which it belongs.

4. A, computer system according to claim 1, wherein said terminal belonging to one of said control groups shares information unique to said control group.

5. A computer system according to claim 4, wherein after said control group has been once constructed, said terminal continues to maintain said unique information until said control group disappears.

6. A computer system according to claim 2, wherein said inter-group relay terminal, when exchange of information is performed between an information exchange source control group being a control group to which said inter-group relay terminal belongs, and an information exchange destination control group being another of said control groups, is a control group other than said information exchange destination control group, and said information exchange is performed via one or a plurality of control groups which are capable of communication with both of said information exchange source control group and said information exchange destination control group.

7. A computer system according to claim 2, wherein said control group provides independently or in response to a request from another control group, a terminal belonging to said control group as said inter-group relay terminal.

8. A computer system according to claim 2, wherein between a plurality of said control groups, acquisition and exchange of information of respective control groups via said inter-group relay terminals, as well instructions and requests necessary for acquisition and exchange of said information can be performed.

9. A computer system according to claim 2, wherein between a plurality of said control groups, it is possible to arbitrarily modify the belonging destination of a terminal belonging to the respective control groups via said inter-group relay terminal.

10. A computer system according to claim 2, wherein a plurality of said control groups adopt a hierarchical structure, and
said inter-group relay terminal belonging to said control group of a kth hierarchy, k: natural number, is made to belong to said control group of a (k + 1) th hierarchy.

11. A computer system according to claim 2, wherein a plurality of said control groups adopt a hierarchical structure, and
said control group of a kth hierarchy, k: natural number, provides a terminal belonging to said kth hierarchy control group as said inter-group relay terminal, for said control group of a (k+1) th hierarchy.

12. A computer system according to claim 10, wherein said control group of a kth hierarchy provides independently or in response to a request from said control group of said (k+1) th hierarchy, a terminal belonging to said kth hierarchy control group, as said inter-group relay terminal.

13. A computer system according to claim 11, wherein said control group of a kth hierarchy provides independently or in response to a request from said control group of said (k+1) th hierarchy, a terminal belonging to said kth hierarchy control group, as said inter-group relay terminal.

14. A computer system according to claim 10, wherein the terminal which is provided as said inter-group relay terminal, is selected based on processing ability of said terminal, or on a load condition of said terminal.

15. A computer system according to claim 11, wherein the terminal which is provided as said inter-group relay terminal, is selected based on processing ability of said terminal, or on a load condition of said terminal.

16. A computer system according to claim 1, wherein a plurality of said control groups adopts a hierarchical structure,
and said control group of a kth hierarchy, k: natural number, belongs to a previously determined standby control group in the case where of said control groups of a (k+1) th hierarchy the control group immediately above itself disappears, and
regarding said control group of a (k+2) th hierarchy, said standby control group participates in the case where the control group immediately below itself disappears, and said control group is incorporated as the control group of the (k+1) th hierarchy in the case where there is a control group standing by.

17. A computer system according to claim 10, wherein a plurality of said control groups adopts a hierarchical structure of an mth hierarchy and
the plurality of said control groups belonging to an nth hierarchy, 1 ≤ n < m, has the same hierarchy inter-group relay terminal which relays information between the other of said control groups within said nth hierarchy.

18. A computer system according to claim 10, wherein said hierarchical structure has a tree structure.

19. A computer system according to claim 11, wherein said hierarchical structure has a tree structure.

20. A computer system according to claim 16, wherein said hierarchical structure has a tree structure.

21. A computer system according to claim 17, wherein said hierarchical structure has a tree structure.

22. A computer system according to any one of claim 18 through claim 21, wherein a control group belonging to an uppermost hierarchy is singular.

23. A computer system according to claim 1, wherein said terminal when relaying said information within corresponding control groups, relays said information by simultaneous multicast transmission.

24. A computer system according to claim 1, wherein said control group is provided for a predetermined area of virtual reality which handles the application program.

25. A computer system according to claim 2, wherein said relay terminal and said inter-group relay terminal notify each other of a list of a plurality of terminals belonging to a control group to which the respective relay terminals belong, and version information of said list.

26. A computer system according to claim 2, wherein said inter-group relay terminal, in the case where normal communication is not occurring between other inter-group relay terminals, performs condition judgment communication in order to determine whether or not said other inter-group relay terminals are operating normally.

27. A computer system according to claim 26, when said condition judgment communication is performed, in the case where, of the plurality of said other inter-group relay terminals which become the object of said condition judgment communication, an inter group relay terminal not belonging to the upper hierarchy is not present, said condition judgment communication is prevented.

28. A control method for a computer system, with a plurality of terminals (5-n) mutually connected via network (1), and a plurality of control groups (AMG-n) constructed from said plurality of terminals, (5-n) **characterized in that** said plurality of control groups (AMG-n), controls such that said terminals (5-n) arbitrarily belong to one or more of said control groups (AMG-n), and selects at least one terminal from of said plurality of control groups (AMG-n) as a relay terminal (5-n) which relays information within said one of control groups (AMG-n), and the one or more of said terminals (5-n) in one control group of said plurality of control groups (AMG-n) transmits information with the others of the control groups (AMG-n) to share data each other and **in that**
in the case where the number of said terminals(5-n) belonging to said control group(AMG-n) becomes less than a previously set minimum construction terminal number, said terminals (5-n) belonging to another control group(AMG-n) different from said control group (AMG-n) or previously determined standby terminal(5-n) which does not belong to any of the control groups(AMG-n) are made to belong said control group (AMG-n).

29. A control method for a computer system according to claim 28, which makes one or a plurality of relay terminals of said relay terminals function as an inter-group relay terminal which relays information between the other of said control groups.

30. A control method for a computer system according to claim 28, which makes said terminal participate with an arbitrary control group to which it belongs, or which disengages said terminal from an arbitrary control group to which it belongs.

31. A control method for a computer system according to claim 28, which shares information unique to said control group with said terminal belonging to one of said control groups.

32. A control method for a computer system according to claim 31, which after said control group has been once constructed, makes said terminal continue to maintain said unique information, until said control group disappears.

33. A control method for a computer system according to claim 29, wherein in said inter-group relay terminal, when exchange of information is performed between an information exchange source control group being a control group to which said inter-group relay terminal belongs, and an information exchange destination control group being another of said control groups, there is a control group other than said information exchange destination control group, and said method performs said information exchange via one or a plurality of control groups which are capable of communication with both of said information exchange source control group and said information exchange destination control group.

34. A control method for a computer system according to claim 29, which provides independently or in response to a request from another control group, a terminal belonging to respective control groups as said inter-group relay terminal.

35. A control method for a computer system according to claim 29, which performs between a plurality of said control groups, acquisition and exchange of information of respective control groups via said inter-group relay terminals, as well as performing instructions and requests necessary for acquisition and exchange of said information.

36. A control method for a computer system according to claim 29, which between a plurality of said control groups, arbitrarily modifies the belonging destination of a terminal belonging to the respective control groups via said inter-group relay terminal.

37. A control method for a computer system according to claim 29, wherein a plurality of said control groups adopt a hierarchical structure, and
which makes said inter-group relay terminal belonging to said control group of a kth hierarchy, k: natural number, belong to said control group of a (k + 1) th hierarchy.

38. A control method for a computer system according to claim 29, wherein a plurality of said control groups adopt a hierarchical structure, and
which provides for said control group of a kth hierarchy, k: natural number, a terminal belonging to said kth hierarchy control group as said inter-group relay terminal, for said control group of a (k+1) th hierarchy.

39. A control method for a computer system according to claim 37 which provides for said control group of a kth hierarchy, independently or in response to a request from said control group of said (k+1) th hierarchy, a terminal belonging to said kth hierarchy control group, as said inter-group relay terminal.

40. A control method for a computer system according to claim 38, which provides for said control group of a kth hierarchy, independently or in response to a request from said control group of said (k+1) th hierarchy, a terminal belonging to said kth hierarchy control group, as said inter-group relay terminal.

41. A control method for a computer system according to any one of claim 37 to claim 40, which selects the terminal which is provided as said inter-group relay terminal, based on processing ability of said terminal or on a load condition of said terminal.

42. A control method for a computer system according to claim 28, wherein a plurality of said control groups adopts a hierarchical structure,
which makes said control group of a kth hierarchy, k: natural number, belong to a previously determined standby control group in the case where of said control groups of the (k+1) th hierarchy the control group immediately above said kth hierarchy control group disappears,
and for said control group of the (k+2) th hierarchy, makes said standby control group participate in the case where the control group immediately below said (k+2) th hierarchy control group disappears, and incorporates said standby control group as the control group of the (k+1) th hierarchy in the case where there is a control group standing by.

43. A control method for a computer system according to claim 28, wherein a plurality of said control groups adopts a hierarchical structure of an mth hierarchy, which gives to the plurality of said control groups belonging to the nth hierarchy, 1≤n<m, the same hierarchy inter-group relay terminal which relays shared information between the other of said control groups within said nth hierarchy.

44. A control method for a computer system according to any one of claim 37 to claim 43 wherein said hierarchical structure has a tree structure.

45. A control method for a computer system according to claim 44, wherein a control group belonging to an uppermost hierarchy is singular.

46. A control method for a computer system according to claim 28 which when relaying said information within control groups corresponding to said terminal, performs relaying of said information by simultaneous multicast transmission.

47. A control method for a computer system according to claim 28, wherein said control group is provided for a predetermined area of virtual reality which handles the application program.

48. A control method for a computer system according to claim 29, which mutually notifies a list of a plurality of terminals belonging to a control group to which the respective relay terminals belong, and version information of said list, to said relay terminal and said inter-group relay terminal.

49. A control method for a computer system according to claim 29, which performs position judgment on said inter-group relay terminal, in the case where normal communication is not occurring between other inter-group relay terminals, in order to determine whether or not said other inter-group relay terminals are operating normally.

50. A control method for a computer system according to claim 49, which when said condition judgment communication is performed, in the case where, of the plurality of said other inter-group relay terminals which become the object of said condition judgment communication, an inter-group relay terminal not belonging to the upper hierarchy is not present, prevents said condition judgment communication.

51. A recording medium recorded with a control program for terminals (5-n) capable of constructing a computer system, by being mutually connected via a network(1), **characterized in that** said control program constructs a plurality of control groups (AMG-n) from said plurality of terminals(5-n) such that said plurality of terminals(5-n) arbitrarily belong to one or more of said control groups (AMG-n), and selects at least one terminal from said plurality of control groups (AMG-n) as a relay terminal (5-n) which relays information within said control group (AMG-n), and the one or more of terminals (5-n) in one control group+- of said plurality of control groups (AMG-n) transmits information with the others of the control groups (AMG-n) to share data with each other, and **in that**,
in the case where the number of said terminal (5-n) belonging to said control group (AMG-n) becomes less than a previously set minimum construction terminal number, said terminals (5-n) belonging to another control group(AMG-n) different to said control group (AMG-n) or previously determines standby terminal (5-n) which does not belong to any of the control groups (AMG-n) are made to belongs said control group (AMG-n).

52. A recording medium according to claim 51, recorded with a control program which makes one or a plurality of relay terminals of said relay terminals function as in inter-group relay terminal which relays information between the other of said control groups.

53. A recording medium according to claim 51, recorded with a control program which makes said terminal participate with an arbitrary control group to which it belongs, or which disengages said terminal from an arbitrary control group to which it belongs.

54. A recording medium according to claim 51, recorded with a control program which makes said inter-group relay terminal belonging to said control group of a kth hierarchy, k : natural number, belong to said control group of a (k+1) th hierarchy.

55. A recording medium according to claim 51, recorded with a control program which, after said control group has been once constructed, makes said terminal continue to maintain said unique information, until said control group disappears.

56. A recording medium according to claim 52, recorded with a control program, wherein in said inter-group relay terminal, when exchange of information is performed between an information exchange source control group being a control group to which said inter-group relay terminal belongs, and an information exchange destination control group being another of said control groups, there is a control group other than said information exchange destination control group, and said program performs said information exchange via one or a plurality of control groups which are capable of communication with both of said information exchange source control group and said information exchange destination control group.

57. A recording medium according to claim 52, recorded with a control program which selects the terminal which is provided as said inter-group relay terminal, based on processing ability of said terminal, or on a load condition of said terminal.

58. A recording medium according to claim 51, recorded with control program which, in the case where the number of said terminal belonging to said control group becomes less than a previously set minimum construction terminal number, sets a previously determined standby terminal which does not belong to any of the control groups, so as to belong to said control group.

59. A recording medium according to claim 52, recorded with a control program which;
makes a plurality of said control groups a hierarchical structure, and
provides from said control group of a kth hierarchy, k : natural number, a terminal belonging to said kth hierarchy control group as said inter-group relay terminal, for said control group of a (k+1) th hierarchy.

60. A recording medium according to claim 59, recorded with a control program which makes said control group of a kth hierarchy provide, independently or in response to a request from said control group of said (k+1) th hierarchy, a terminal belonging to said kth hierarchy control group, as said inter-group relay terminal.

61. A recording medium according to claim 51, recorded with a control program which;
makes a plurality of said control groups a hierarchical structure,
and makes said control group of a kth hierarchy, k: natural number, belong to a previously determined standby control group in the case where of said control groups of a (k+1) th hierarchy the control group immediately above said kth hierarchy control group disappears, and
makes said standby control group participate in said control group of a (k+2) th hierarchy, in the case where the control group immediately below the (k+2) th hierarchy control group disappears, and incorporates said standby control group as the control group of the (k+1) th hierarchy in the case where there is a control group standing by.

62. A recording medium according to claim 52, recorded with a control program which makes said relay terminal and said inter-group relay terminal notify each other of a list of a plurality of terminals belonging to a control group to which the respective relay terminals belong, and version information of said list.

63. A recording medium according to claim 52, recorded with a control program which makes said inter-group relay terminal, in the case where normal communication is not occurring between other inter-group relay terminals, perform condition judgment communication in order to determine whether or not said other inter-group relay terminals are operating normally.

64. A recording medium according to claim 56, recorded with a control program which, when said condition judgment communication is performed, in the case where, of the plurality of said other inter-group relay terminals which become the object of said condition judgment communication, an inter-group relay terminal not belonging to the upper hierarchy is not present, prevents said condition judgment communication.

## Patentansprüche

1. Computersystem mit einer Mehrzahl von Anschlüssen (5-n), die über ein Netzwerk (1) miteinander verbunden sind, und einer Mehrzahl von Steuergruppen (AMG-n), die aus der Mehrzahl von Anschlüssen (5-n) gebildet sind, **dadurch** gekenntzeichnet, dass die Konstruktion so ist, dass die Anschlüsse (5-n) beliebig zu einer oder mehrerer der Steuergruppen (AMG-n) gehören, einer oder mehrere Anschlüsse (5-n) innerhalb der Mehrzahl von Anschlüssen (5-n) Informationen innerhalb einer der Steuergruppen (AMG-n) weiterleiten, und einer oder mehrere Anschlüsse (5-n) in einer der Steuergruppen (AMG-n) informationen an die anderen der Mehrzahl von Steuergruppen (AMG-n) überträgt, um Daten miteinander zu teilen, und **dadurch**, dass
in dem Fall, in dem die Anzahl der Anschlüsse (5-n), die zur Steuergruppe (AMG-n) gehören, kleiner wird als eine voreingestellte minimale Konstruktionsanschlußanzahl, veranlaßt wird, dass die Anschlüsse (5-n), die zu einer anderen Steuergruppen (AMG-n) gehören, die von der Steuergruppe (AMG-n) verschieden ist, oder ein vorher festgelegter Reserveanschluß (5-n), der zu keiner der Steuergruppen (AMG-n) gehört, zur Steuergruppe (AMG-n) gehören.

2. Computersystem nach Anspruch 1 wobei einer oder eine Mehrzahl von Relaisanschlüssen der Relaisanschlüsse als gruppenübergreifender Relaisanschluß fungiert, der Informationen zwischen den anderen Steuergruppen weiterleitet.

3. Computersystem nach Anspruch 1, wobei der Anschluß an einer beliebigen Steuergruppe, zu der er gehört, teilnehmen oder sich von einer beliebigen Steuergruppe, zu der er gehört, trennen kann.

4. Computersystem nach Anspruch 1, wobei der Abschluß, der zu einer der Steuergruppen gehört, Informationen teilt, die für die Steuergruppe unverwechselbar sind.

5. Computersystem nach Anspruch 4, wobei, nachdem die Steuergruppe einmal gebildet worden ist, der Anschluß die unverwechselbaren Informationen solange weiterhin behält, bis die Kontrollgruppe verschwindet.

6. Computersystem nach Anspruch 2, wobei der gruppenübergreifende Relaisanschluß, wenn ein Informationsaustausch zwischen einer Informationsaustausch-Quellsteuergruppe, die eine Steuergruppe ist, zu der der gruppenübergreifende Relaisanschluß gehört, und einer Informationsaustausch-Zielsteuergruppe durchgeführt wird, die eine andere der Steuergruppen ist, eine andere Steuergruppe als die Informationsaustausch-Zielsteuergruppe ist, und der Informationsaustausch wird über eine oder eine Mehrzahl von Steuergruppen durchgeführt, die zur Kommunikation sowohl mit der Informationsaustausch-Quellsteuergruppe als auch mit der Informationsaustausch-Zielsteuergruppe in der Lage sind.

7. Computersystem nach Anspruch 2, wobei die Steuergruppe unabhängig oder in Reaktion auf eine Anfrage von einer anderen Steuergruppe einen Anschluß, der zur Steuergruppe gehört, als gruppenübergreifenden Relaisanschluß zur Verfügung stellt.

8. Computersystem nach Anspruch 2, wobei zwischen einer Mehrzahl der Steuergruppen Akquisition und Austausch von Informationen entsprechender Steuergruppen über den gruppenübergreifenden Relaisanschluß sowie von Instruktionen und Anfragen durchgeführt werden könnten, die für die Akquisition und den Austausch von Informationen notwendig sind.

9. Computersystem nach Anspruch 2, wobei es zwischen einer Mehrzahl der Steuergruppen möglich ist, das zugehörige Ziel eines Anschlusses der zu den entsprechenden Steuergruppen gehört, über den gruppenübergreifenden Relaisanschluß beliebig zu modifizieren.

10. Computersystem nach Anspruch 2, wobei eine Mehrzahl der Steuergruppen eine hierarchische Struktur annimmt und
veranlaßt wird, dass der gruppenübergreifende Relaisanschluß, der zur Steuergruppe einer k-ten Hierarchie gehört, wobei k eine natürliche Zahl ist, zur Steuergruppe einer (k+1)-ten Hierarchie gehört

11. Computersystem nach Anspruch 2, wobei eine Mehrzahl der Steuergruppen eine hierarchische Struktur annimmt und
die Steuergruppen einer k-ten Hierarchie, wobei K eine natürliche Zahl ist, einen Anschluß, der zur Steuergruppe der k-ten Hierarchie gehört, als gruppenübergreifenden Relaisanschluß für die Steuergruppe einer (k+1)-ten Hierarchie zur Verfügung stellt.

12. Computersystem nach Anspruch 10, wobei die Steuergruppe einer k-ten Hierarchie unabhängig von oder in Reaktion auf eine Anfrage von der Steuergruppe der (k+1)-ten Hierarchie einen Anschluß als gruppenübergreifenden Relaisanschluß zur Verfügung stellt, der zur Steuergruppe der k-ten Hierarchie gehört.

13. Computersystem nach Anspruch 1, wobei die Steuergruppen einer k-ten Hierarchie unabhängig von oder in Reaktion auf eine Anfrage von der Steuergruppe der (k+1)-ten Hierarchie einen Anschluß als gruppenübergreifenden Relaisanschluß zur Verfügung stellt, der zur Steuergruppe der k-ten Hierarchie gehört.

14. Computersystem nach Anspruch 10, wobei der der Anschluß der als gruppenübergreifender Abschluß zur Verfügung gestellt wird, basierend auf der Verarbeitungsfähigkeit des Anschlusses oder auf einer Lastbedingung des Anschlusses ausgewählt wird.

15. Computersystem nach Anspruch 11, wobei der Abschluß, der als gruppenübergreifender Anschluß zur Verfügung gestellt wird, basierend auf der Verarbeitungsfähigkeit des Anschlusses oder auf einer Lastbedingung des Anschlusses ausgewählt wird.

16. Computersystem nach Anspruch 1, wobei eine Mehrzahl der Steuergruppen eine hierarchische Struktur annimmt
und die Steuergruppen einer k-ten Hierarchie, wobei k eine natürliche Zahl ist, in dem Fall, in dem von den Steuergruppen einer (k+1)-ten Hierarchie die Steuergruppe unmittelbar über ihr verschwindet, zu einer vorher bestimmten Reservesteuergruppe gehört, und
die Reservesteuergruppe hinsichtfich der Steuergruppe einer (k+2)-ten Hierarchie in dem Fall, in dem die Steuergruppe unmittelbar unter ihr verschwindet, teilnimmt und die Steuergruppe in dem Fall, in dem eine Steuergruppe bereitsteht, als Steuergruppe der (k+1)-ten Hierarchie eingebunden wird.

17. Computersystem nach Anspruch 100, wobei eine Mehrzahl von Steuergruppen eine hierarchische Struktur einer m-ten Hierarchie annimmt und
die Mehrzahl der Steuergruppen, die zu einer n-ten Hierarchie gehören, wobei 1≤:n<m ist, denselben gruppenübergreifenden Relaisanschluß der Hierarchie aufweisen, der Informationen zwischen den anderen Steuergruppen innerhalb der n-ten Hierarchie weiterleiten.

18. Computersystem nach Anspruch 10, wobei die hierarchische Struktur eine Baumstruktur aufweist.

19. Computersystem nach Anspruch 11, wobei die hierarchische Struktur eine Raumstruktur aufweist.

20. Computersystem nach Anspruch 16, wobei die hierarchische Struktur eine Baumstruktur aufweist.

21. Computersystem nach Anspruch 17, wobei die hierarchische Struktur eine Raumstruktur aufweist

22. Computersystem nach einem der Ansprüche 18 bis 21, wobei eine Steuergruppe, die zu einer höchsten Hierarchie gehört, singulär ist.

23. Computersystem nach Aspruch 1, wobei der Anschluß die Informationen durch gleichzeitige Multicastübertragung weiterleitet, wenn er die Informationen innerhalb entsprechender Steuergruppen weiterleitet.

24. Computersystem nach Anspruch 1, wobei die Steuergruppe für einen vorgegebenen Bereich einer virtuellen Realität vorgesehen ist, die das Anwendungsprogramm bedient.

25. Computersystem nach Anspruch 2, wobei sich der Relaisanschluß und der gruppenübergreifende Relaisanschluß bezüglich einer Liste einer Mehrzahl von Anschlüssen, die zu einer Steuergruppe gehören, zu der entsprechende Relaisanschlüsse gehören, sowie bezüglich Versionsinformationen der Liste gegenseitig benachrichtigen.

26. Computersystem nach Anspruch 2, wobei der gruppenübergreifende Relaisanschluß in dem Fall, in dem keine normale Kommunikation zwischen anderen gruppenübergreifenden Relaisanschlüssen auftritt, eine Bedingungsbeugsbeurteilungskommunikation durchführt, um zu ermitteln, ob die anderen gruppenübergreifenden Relaisanschlüsse normal arbeiten oder nicht.

27. Computersystem nach Anspruch 26, wobei, wenn die Bedingungsbeurteilungskommunikation durchgeführt wird, in dem Fall, in dem ein nicht zur oberen Hierarchie gehörender gruppenübergreifender Relaisanschluß aus der Mehrzahl der anderen gruppenübergreifenden Relaisanschlüsse, die zum Gegenstand der Bedingungsbeurteilungskommunikation werden, nicht anwesend ist, die Bedingungsbeurteilungskommunikation verhindert wird.

28. Steuerverfahren für ein Computersystem mit einer Mehrzahl von Anschlüssen (5-n), die über ein Netzwerk (1) miteinander verbunden sind, und einer Mehrzahl von Steuergruppen (AMG-n), die aus der Mehrzahl von Anschlüssen (5-n) gebildet sind, **dadurch gekennzeichnet, dass** die Mehrzahl von Steuergruppen (AMG-n) derart steuern, dass die Anschlüsse (5-n) beliebig zu einer oder mehrerer der Steuergruppen (AMG-n) gehören, und zumindest einen Anschluß aus der Mehrzahl von Steuergruppen (AMG-n) als Relaisanschluß (5-n) auswählen, der Informationen innerhalb der einen aus den Steuergruppen (AMG-n) weiterleiten, und der eine oder die mehreren der Anschlüsse (5-n) in einer Steuergruppe der Mehrzahl von Steuergruppen (AMG-n) Formationen mit den anderen Steuergruppe (AMG-n) überragen, um Daten miteinander zu teilen, und **dadurch**, dass
in dem Fall, in dem die Anzahl der Anschlüsse (5-n), die zur Steuergruppe (AMG-n) gehören, kleiner wird als eine vorher festgeelgte minimale Konstruktionsanschlußanzahl, veranlaßt wird, dass die Anschlüsse (5-n), die zu einer anderen Steuergruppe (AMG-n) gehören, die von der Steuergruppe (AMG-n) verschieden ist, oder ein vorher festgelegter Reserveanschluß (5-n), der zu keiner der Steuergruppen (AMG-n) gehört, zur Steuergruppe (AMG-n) gehören.

29. Steuerverfahren für ein Computersystem nach Anspruch 28, das veranlaßt, dass einer oder eine Mehrzahl von Relaisanschlüssen der Relaisanschlüsse als gruppenübergreifender Relaisanschluß fungiert, der Informationen zwischen den anderen Steuergruppen weiterleitet.

30. Steuerverfahren für ein Computersystem nach Anspruch 28, das veranlaßt, dass der Anschluß an einer beliebigen Steuergruppe, zu der er gehört, teilnimmt, oder den Anschluß von einer beliebigen Steuergruppe, zu der er gehört, trennt.

31. Steuerverfahren für ein Computersystem nach Anspruch 28, das mit dem Abschluß, der zu einer der Steuergruppen gehört, informationen teilt, die für die Steuergruppe unverwechselbar sind.

32. Steuerverfahren für ein Computersystem nach Anspruch 31, das, nachdem die Steuergruppe einmal gebildet worden ist, veranlaßt, dass der Anschluß die unverwechselbaren Informationen solange weiterhin behält, bis die Kontrollgruppe verschwindet.

33. Steuerverfahren für ein Computersystem nach Anspruch 29, wobei der gruppenübergreifende Relaisanschluß, wenn ein Informationsaustausch zwischen einer Informationsaustausch-Quellsteuergruppe, die eine Steuergruppe ist, zu der der gruppenübergreifende Relaisanschluß gehört, und einer Informationsaustausch-Zielssteuergruppe durchgeführt wird, die eine andere der Steuergruppen ist, eine andere Steuergruppe als die Informationsaustausch-Zielsteuergruppe ist, und das Herfahren den informationsaustausch über eine oder eine Mehrzahl von Steuergruppen durchführt, die zur Kommunikation sowohl mit der Informationsaustausch-Quellsteuergruppe als auch mit der Informationsaustausch-Zielsteuergruppe in der Lage sind.

34. Steuerverfahren für ein Computersystem nach Anspruch 29, das unabhängig von oder in Reaktion auf eine Anfrage von einer anderen Steuergruppe einen Anschluß, der zu entsprechenden Steuergruppen gehört, als den gruppenübergreifenden Relaisanschluß zur Verfügung stellt.

35. Steuerverfahren für ein Computersystem nach Anspruch 29, das zwischen einer Mehrzahl der Steuergruppen Akquisition und Austausch von Informationen entsprechender Steuergruppen über den gruppenübergreifenden Relaisanschluß sowie instruktionen und Anfrage durchführt, die für die Akquisition und den Austausch von informationen notwendig sind.

36. Steuerverfahren für ein Computersystem nach Anspruch 29, das zwischen einer Mehrzahl der Steuergruppen das zugehörige Ziel eines Anschlusses, der zu den entsprechenden Steuergruppen gehört, über den gruppenübergreifenden Relaisanschluß beliebig modifiziert.

37. Steuerverfahren für ein Computersystem nach Anspruch 29, wobei eine Mehrzahl der Steuergruppen eine hierarchische Struktur annimmt, und
das veranlaßt, dass der gruppenübergreifende Relaisanschluß, der zur Steuergruppe einer k-ten Hierarchie gehört, wobei k eine natürliche Zahl ist, zur Steuergruppe einer (k+1)-ten Hierarchie gehört.

38. Steuerverfahren für ein Computersystem nach Anspruch 29, wobei eine Mehrzahl der Steuergruppen eine hierarchische Struktur annimmt, und
das der Steuergruppe einer k-ten Hierarchie, wobei K eine natürliche Zahl st, einen Anschluß, der zur Steuergruppe der k-ten Hierarchie gehört, als gruppenübergreifenden Relaisanschluß für die Steuergruppe einer (k+1)-ten Hierarchie zur Verfügung steilt.

39. Steuerverfahren für ein Computersystem nach Anspruch 37, das für die Steuergruppe einer k-ten Hierarchie unabhängig von oder in Reaktion auf eine Anfrage von der Steuergruppe der (k+1)-ten Hierarchie einen Anschluß als gruppenübergreifenden Relaisanschluß zur Verfügung stellt, der zur Steuergruppe der k-ten Hierarchie gehört.

40. Steuerverfahren für ein Computersystem nach Anspruch 38, das für die Steuergruppen einer k-ten Hierarchie unabhängig von oder in Reaktion auf eine Anfrage von der Steuergruppe der (k+1)-ten Hierarchie einen Anschluß als gruppenübergreifenden Relaisanschluß zur Verfügung stellt, der zur Steuergruppe der k-ten Hierarchie gehört.

41. Steuerverfahren für ein Computersystem nach einem der Ansprüche 37 bis 40, das den Anschluß, der als gruppenübergreifender Abschluß zur Verfügung gestellt wird, basierend auf der Verarbeitungsfähigkeit des Anschlusses oder auf einer Lastbedingung des Anschlusses auswählt.

42. Steuerverfahren für ein Computersystem nach Anspruch 28, wobei eine Mehrzahl der Steuergruppen eine hierarchische Struktur annimmt,
das veranlaßt, dass die Steuergruppe einer k-ten Hierarchie, wobei k eine natürliche Zahl ist, in dem Fall, in dem von den Steuergruppen einer (k-1)-ten Hierarchie die Steuergruppe unmittelbar über ihr verschwinden, zu einer vorher bestimmten Reservesteuergruppe gehört, und
für die Steuergruppe der (k+2)-ten Hierarchie veranlaßt, dass die Reservesteuergruppe in dem Fall teilnimmt, in dem die Steuergruppe ummittelbar unter der Steuergruppe der (k+2)-ten Hierarchie verschwindet, und die Reservesteuergruppe in dem Fall, in dem eine Steuergruppe bereitsteht, als Steuergruppe der (k+1)-ten Hierarchie einbindet.

43. Steuerverfahren für ein Computersystem nach Anspruch 28, wobei eine Mehrzahl der Steuergruppen eine hierarchische Struktur einer m-ten Hierarchie annimmt das der Mehrzahl der Steuergruppe, die zur n-ten Hierarchie gehören, wobei 1≤n<m ist, denselben gruppenübergreifenden Relaisanschluß der Hierarchie zur Verfügung stellt, der gemeinsam genutzte Informationen zwischen den anderen Kontrollgruppen innerhalb der n-ten Hierarchie weiterleiten.

44. Steuerverfahren für ein Computersystem nach einem der Anspruche 37 bis 43, wobei die hierarchische Struktur eine Baumstruktur aufweist

45. Steuerverfahren für ein Computersystem nach Anspruch 44, wobei eine Steuergruppe, die zu einer höchsten Hierarchie gehört, singulär ist.

46. Steuerverfahren für ein Computersystem nach Anspruch 28, das, wenn die Informationen innerhalb von Steuergruppen weiterleitet werden, die dem Anschluß entsprechen, die Weiterleitung der Informationen durch gleichzeitige Multicastübertragung durchführt.

47. Steuerverfahren für ein Computersystem nach Anspruch 28, wobei die Steuergruppe für einen vorgegebenen Bereich einer virtuellen Realität vorgesehen list, die das Anwendungsprogramm bedient.

48. Steuerverfahren für ein Computersystem nach Anspruch 29, das eine Liste einer Mehrzahl von Anschlüsse, die zu einer Steuergruppe gehören, zu der die entsprechenden Relaisanschlüsse gehören, und Versionsinformationen der Liste gemeinsam dem Relaisanschluß und dem gruppenübergreifenden Relaisanschluß mittelt.

49. Steuerverfahren für ein Computersystem nach Anspruch 29, das in dem Fall, in dem keine normale Kommunikation zwischen anderen gruppenübergreifenden Relaisanschlüssen auftritt, eine Positionsbeurteilung am gruppenübergreifenden Anschluß durchführt, um zu ermitteln, ob die anderen gruppenübergreifenden Relaisanschlüsse normal arbeiten oder nicht.

50. Steuerverfahren für ein Computersystem nach Anspruch 49, das, wenn die Bedingungsbeurteilungskommunikation durchgeführt wird, in dem Fall, in dem ein nicht zur oberen Hierarchie gehörender gruppen übergreifender Relaisanschluß aus der Mehrzahl der anderen gruppenübergreifenden Relaisanschlüsse, die zum Gegenstand der Bedingungsbeurteilungskommunikation werden, nicht anwesend ist, die Bedingungsbeurteilungskommuunikation verhindert.

51. Aufzeichnungsmedium, auf dem ein Steuerprogramm für Anschlüsse (5-n) aufgezeichnet ist, die in der Lage sind, ein Computersystem zu bilden, indem sie über ein Netzwerk (1) miteinander verbunden werden, **dadurch gekennzeichnet, dass** das Steuerprogramm aus der Mehrzahl von Anschlüsse (5-n) eine Mehrzahl von Steuergruppen (AMG-n) bildet, so dass die Abschlüsse (5-n) beliebig zu einer oder mehrerer der Steuergruppen (AMG-n) gehören, und zumindest einen Anschluß aus der Mehrzahl von Steuergruppen (AMG-n) als Relaisanschluß (5-n) auswählt, der Informationen innerhalb der Steuergruppe (AMG-n) weiterleitet, und der eine oder die mehreren Anschlüsse (5-n) in einer Steuergruppe der Mehrzahl von Steuergruppen (AMG-n) überträgt Informationen mit den anderen Steuergruppen (AMG-n), um Daten miteinander zu teilen, und **dadurch**, dass
in dem Fall, in dem die Anzahl der Anschlüsse (5-n), die zur Steuergruppe (AMG-n) gehören kleiner wird als eine vorher festgelegte minimale Konstruktionsanschlußanzahl, veranlaßt wird, dass die Anschlüsse (5-n), die zu einer anderen Steuergruppe (AMG-n) gehören, die von der Steuergruppe (AMG-n) verschieden ist, oder ein vorher festgelegter Reserveanschluß (5-n), der zu kleiner der Steuergruppen (AMG-n) gehört, zur Steuergruppe (AMG-n) gehören.

52. Aufzeichnungsmedium nach Anspruch 51, auf dem ein Steuerprogramm aufgezeichnet ist, das veranlaßt, dass einer oder eine Mehrzahl von Relaisanschlüssen der Relaisanschlüsse als gruppenübergreifender Relaisanschluß fungiert, der Informationen zwischen den anderen Steuergruppen weiterleitet,

53. Aufzeichnungsmedium nach Anspruch 51, auf dem ein Steuerprogramm aufgezeichnet ist, das veranlaßt, dass der Anschluß an einer beliebigen Steuergruppe, zu der er gehört, teilnimmt, oder den Anschluß von einer beliebigen Steuergruppe, zu der er gehört, trennt.

54. Aufzeichnungsmedium nach Anspruch 51, auf dem ein Steuerprogramm aufgezeichnet ist, das veranlaßt, dass der gruppenübergreifende Relaisanschluß, der zur Steuergruppe einer k-ten Hierarchie gehört, wobei k eine natürliche Zahl ist, zur Steuergruppe einer (k+1)-ten Hierarchie gehört.

55. Aufzeichnungsmedium nach Anspruch 51, auf dem ein Steuerprogramm aufgezeichnet ist, das, nachdem die Steuergruppe einmal gebildet worden ist, den Anschluß dazu veranlaßt, die unverwechselbaren Informationen solange weiterhin aufrechtzuerhalten, bis die Steuergruppe verschwindet.

56. Aufzeichnungsmedium nach Anspruch 52, auf dem ein Steuerprogramm aufgezeichnet ist, wobei es in dem gruppenübergreifenden Relaisanschluß, wenn ein Informationsaustausch zwischen einer Informationsaustausch-Quellsteuergruppe, die eine Steuergruppe ist, zu der der gruppenübergreifende Relaisanschluß gehört, und einer Informationsaustausch-Zielsteuergruppe, die eine weitere Steuergruppe ist, durchgeführt wird, eine andere Steuergruppe als die Informationsaustausch-Zielsteuergruppe gibt, und das Programm den Informationsaustausch über eine oder eine Mehrzahl von Steuergruppen durchführt, die zur Kommunikation sowohl mit der Informationsaustausch-Quellsteuergruppe als auch mit der Informationsaustausch-Zielsteuergruppe in der Lage ist.

57. Aufzeichnungsmedium nach Anspruch 52, auf dem ein Steuerprogramm aufgezeichnet ist, das den Abschluß, der als gruppenübergreifender Relaisanschluß vorgesehen ist, basierend auf der Verarbeitungsfähigkeit des Anschlusses oder auf einer Lastbedingung des Anschlusses auswählt.

58. Aufzeichnungsmedium nach Anspruch 51, auf dem ein Steuerprogramm aufgezeichnet ist, das in dem Fall, in dem die Anzahl der Anschlüsse, die zur Steuergruppe gehören, niedriger wird als eine vorher festgelegte minimale Konstruktionsanschlußanzahl, festlegt, einen vorher ermittelten Reserveanschluß, der nicht zu irgendeiner der Steuergruppen gehört, als zur Steuergruppe gehörend festlegt,

59. Aufzeichnungsmedium nach Anspruch 52, auf dem ein Steuerprogramm aufgezeichnet ist, das:
eine Mehrzahl der Steuergruppen zu einer hierarchischen Struktur macht, und
aus der Steuergruppe einer k-ten Hierarchie, wobei k eine natürliche Zahl ist, einen Anschluß, der zur Steuergruppe der k-ten Hierarchie gehört, als gruppenübergreifenden Anschluß für die Steuergruppe einer (k+1)-ten Hierarchie zur Verfügung stellt.

60. Aufzeichnungsmedium nach Anspruch 59, auf dem ein Steuerprogramm aufgezeichnet ist, das veranlaßt, dass die Steuergruppe einer k-ten Hierarchie unabhängig oder in Reaktion auf eine Anfrage von der Steuergruppe der (k+1)-ten Hierarchie einen Anschluß, der zur Steuergruppe der k-ten Hierarchie gehört, als gruppenübergreifenden Relaisanschluß zur Verfügung stellt.

61. Aufzeichnungsmedium nach Anspruch 51, auf dem ein Steuerprogramm aufgezeichnet ist, das:
eine Mehrzahl der Steuergruppen zu einer hierarchischen Struktur macht,
und in dem Fall, in dem von den Steuergruppe einer (k+1)-ten Hierarchie die Steuergruppen ummittelbar über der Steuergruppe der k-ten Hierarchie verschwindet, veranlaßt, dass die Steuergruppe einer k-ten Hierarchie, wobei k eine natürliche Zahl ist, zu einer vorher bestimmten Reservesteuergruppe gehört und
veranlaßt, dass die Reservesteuergruppe an der Steuergruppen einer (k+2)-ten Hierarchie teilnimmt für den Fall, dass die Steuergruppe unmittelbar unter der Steuergruppe der (k+2)-ten Hierarchie verschwindet, und in dem Fall, in dem eine Steuergruppe bereitsteht, die Reservesteuergruppe als Steuergruppe der (k+1)-ten Hierarchie integriert.

62. Aufzeichnungsmedium nach Anspruch 52, auf dem ein Steuerprogramm aufgezeichnet ist, das veranlaßt, dass sich der Relaisanschluß und der gruppenübergreifende Anschluß bezüglich einer Liste einer Mehrzahl von Anschlüssen, die zu einer Steuergruppe gehören, zu der der entsprechende Relaisanschluß gehört, sowie bezüglich Versionsinformationen der Liste gegenseitig benachrichtigen.

63. Aufzeichnungsmedium nach Anspruch 52, auf dem ein Steuerprogramm aufgezeichnet ist, das den gruppenübergreifenden Abschluß in dem Fall, in dem keine normale Kommunikation zwischen anderen gruppenübergreifenden Anschlüssen auftritt, dazu veranlaßt, eine Bedingungsbeurteilungskommunikation durchzuführen, um zu ermitteln, ob die anderen gruppenübergreifenden Abschlüsse normal arbeiten oder nicht.

64. Aufzeichnungsmedium nach Anspruch 56, auf dem ein Steuerprogramm aufgezeichnet ist, das, wenn die Bedingungsbeurteilungskommunikation durchgeführt wird, die Bedingungsbeurteilungskommunikation in dem Fall verhindert, in dem aus der Mehrzahl der anderen gruppenübergreifenden Anschlüsse, die zum Gegenstand der Bedingungsbeurteilungskommunikation werden, ein gruppenübergresfender Abschluß, der nicht zur oberen Hierarchie gehört, nicht anwesend ist.

## Revendications

1. Système informatique comportant une pluralité de terminaux (5-n) mutuellement connectés par l'intermédiaire d'un réseau (1), et une pluralité de groupes de commande (AMG-n) construits à partir de ladite pluralité de terminaux (5-n), **caractérisé en ce que** la construction est telle que lesdites terminaux (5-n) appartiennent arbitrairement à un ou plusieurs desdits groupes de commande (AMG-n), un ou plusieurs terminaux (5-n) dans la pluralité desdits terminaux (5-n) relaient des informations dans l'un desdits groupes de commande (AMG-n), et lesdits un ou plusieurs terminaux (5-n) dans l'un desdits groupes de commande (AMG-n) échangent des informations avec les autres de ladite pluralité de groupes de commande (AMG-n) pour partager des données entre eux, et **en ce que**
dans le cas où le nombre desdites terminaux (5-n) appartenant audit groupe de commande (AMG-n) devient inférieur à un nombre de terminaux de construction minimum fixé précédemment, lesdits terminaux (5-n) appartenant à un autre groupe de commande (AMG-n) différent dudit groupe de commande (AMG-n) ou un terminal (5-n) en attente déterminé précédemment qui n'appartient à aucun des groupes de commande (AMG-n) sont amenés à appartenir audit groupe de commande (AMG-n).

2. Système informatique selon la revendication 1, dans lequel un ou une pluralité de terminaux de relais parmi lesdits terminaux de relais fonctionnent en tant que terminal de relais entre groupes qui relaie des informations entre les autres desdits groupes de commande.

3. Système informatique selon la revendication 1, dans lequel ledit terminal peut participer à un groupe de commande arbitraire auquel il appartient, ou peut se désengager d'un groupe de commande arbitraire auquel il appartient.

4. Système informatique selon la revendication 1, dans lequel ledit terminal appartenant à l'un desdits groupes de commande partage des informations propres audit groupe de commande.

5. Système informatique selon la revendication 4, dans lequel, une fois que ledit groupe de commande a été construit, ledit terminal continue de maintenir lesdites informations propres jusqu'à ce que ledit groupe de commande disparaisse.

6. Système informatique selon la revendication 2, dans lequel ledit terminal de relais entre groupes, lorsqu'un échange d'informations est effectué entre un groupe de commande de source d'échange d'informations, qui est un groupe de commande auquel ledit terminal de relais entre groupes appartient, et un groupe de commande de destination d'échange d'informations qui est un autre desdits groupes de commande, est un groupe de commande autre que ledit groupe de commande de destination d'échange d'informations, et ledit échange d'informations est effectué par l'intermédiaire d'un ou d'une pluralité de groupes de commande qui sont capables de communiquer à la fois avec ledit groupe de commande de source d'échange d'informations et ledit groupe de commande de destination d'échange d'informations.

7. Système informatique selon la revendication 2, dans lequel ledit groupe de commande fournit, indépendamment d'une demande ou en réponse à une demande d'un autre groupe de commande, un terminal appartenant audit groupe de commande en tant que dit terminal de relais entre groupes.

8. Système informatique selon la revendication 2, dans lequel, entre une pluralité desdits groupes de commande, l'acquisition et l'échange d'informations de groupes de commande respectifs par l'intermédiaire desdits terminaux de relais entre groupes, ainsi que des instructions et des demandes nécessaires pour l'acquisition et l'échange desdites informations peuvent être effectués.

9. Système informatique selon la revendication 2, dans lequel, entre une pluralité desdits groupes de commande, il est possible de modifier arbitrairement la destination d'appartenance d'un terminal appartenant aux groupes de commande respectifs par l'intermédiaire dudit terminal de relais entre groupes.

10. Système informatique selon la revendication 2, dans lequel une pluralité desdits groupes de commande adoptent une structure hiérarchique, et
ledit terminal de relais entre groupes appartenant audit groupe de commande d'une k^{è} hiérarchie, k est un nombre naturel, est amené à appartenir audit groupe de commande d'une k+1)^{è} hiérarchie.

11. Système informatique selon la revendication 2, dans lequel une pluralité desdits groupes de commande adoptent une structure hiérarchique, et
ledit groupe de commande d'une k^{è} hiérarchie, k est un nombre naturel, fournit un terminal appartenant audit groupe de commande de k^{è} hiérarchie en tant que dit terminal de relais entre groupes, pour ledit groupe de commande d'une (k + 1)^{è} hiérarchie.

12. Système informatique selon la revendication 10, dans lequel ledit groupe de commande d'une k^{è} hiérarchie fournit, indépendamment d'une demande ou en réponse à une demande dudit groupe de commande de ladite (k + 1)^{è} hiérarchie, un terminal appartenant audit groupe de commande de k^{è} hiérarchie, en tant que dit terminal de relais entre groupes.

13. Système informatique selon la revendication 11, dans lequel ledit groupe de commande d'une k^{è} hiérarchie fournit, indépendamment d'une demande ou en réponse à une demande dudit groupe de commande de ladite (k + 1)^{è} hiérarchie, un terminal appartenant audit groupe de commande de k^{è} hiérarchie, en tant que dit terminal de relais entre groupes.

14. Système informatique selon la revendication 10, dans lequel le terminal qui est fourni en tant que dit terminal de relais entre groupes est sélectionné sur la base de la capacité de traitement dudit terminal, ou d'une condition de charge dudit terminal.

15. Système informatique selon la revendication 11, dans lequel le terminal qui est fourni, en tant que dit terminal de relais entre groupes est sélectionné sur la base de la capacité de traitement dudit terminal, ou d'une condition de charge dudit terminal.

16. Système informatique selon la revendication 1, dans lequel une pluralité desdits groupes de commande adopte une structure hiérarchique,
et ledit groupe de commande d'une k^{è} hiérarchie, k est un nombre naturel, appartient à un groupe de commande en attente déterminé précédemment dans le cas où, parmi lesdits groupes de commande d'une (k + 1)^{è} hiérarchie, le groupe de commande immédiatement au-dessus de lui disparaît, et
concernant ledit groupe de commande d'une (k + 2)^{è} hiérarchie, ledit groupe de commande en attente participe dans le cas où le groupe de commande immédiatement au-dessous de lui disparaît, et ledit groupe de commande est incorporé en tant que groupe de commande de la (k + 1)^{è} hiérarchie dans le cas où il y a un groupe de commande en attente.

17. Système informatique selon la revendication 10, dans lequel une pluralité desdits groupes de commande adoptent une structure hiérarchique d'une m^{è} hiérarchie, et
la pluralité desdits groupes de commande appartenant à une n^{è} hiérarchie, 1 ≤ n < m, comporte le terminal de relais entre groupes de même hiérarchie qui relaie des informations entre les autres desdits groupes de commande dans la n^{è} hiérarchie.

18. Système informatique selon la revendication 10, dans lequel ladite structure hiérarchique a une structure arborescente.

19. Système informatique selon la revendication 11, dans lequel ladite structure hiérarchique a une structure arborescente.

20. Système informatique selon la revendication 16, dans lequel ladite structure hiérarchique a une structure arborescente.

21. Système informatique selon la revendication 17, dans lequel ladite structure hiérarchique a une structure arborescente.

22. Système informatique selon l'une quelconque des revendications 18 à 21, dans lequel un groupe de commande appartenant à une hiérarchie la plus élevée est singulier.

23. Système informatique selon la revendication 1, dans lequel ledit terminal, lorsqu'il relaie lesdites informations dans des groupes de commande correspondants, relaie lesdites informations par une transmission multidiffusion simultanée.

24. Système informatique selon la revendication 1, dans lequel ledit groupe de commande est prévu pour une zone prédéterminée de réalité virtuelle qui gère le programme d'application.

25. Système informatique selon la revendication 2, dans lequel ledit terminal de relais et ledit terminal de relais entre groupes communiquent l'un à l'autre une liste d'une pluralité de terminaux appartenant à un groupe de commande auquel les terminaux de relais respectifs appartiennent, et les informations de version de ladite liste.

26. Système informatique selon la revendication 2, dans lequel ledit terminal de relais entre groupes, dans le cas où une communication normale ne se produit pas entre d'autres terminaux de relais entre groupes, effectue une communication de jugement de condition afin de déterminer si, oui ou non, lesdits autres terminaux de relais entre groupes fonctionnent normalement.

27. Système Informatique selon la revendication 26, dans lequel, lorsque ladite communication de jugement de condition est effectuée, dans le cas où, parmi la pluralité desdits autres terminaux de relais entre groupes qui deviennent l'objet de ladite communication de jugement de condition, un terminal de relais entre groupes n'appartenant pas à la hiérarchie supérieure n'est pas présent, ladite communication de jugement de condition est empêchée.

28. Procédé de commande pour un système informatique, comportant une pluralité de terminaux (5-n) mutuellement connectés par l'intermédiaire d'un réseau (1), et une pluralité de groupes de commande (AMG-n) construits à partir de ladite pluralité de terminaux (5-n), **caractérisé en ce que** ladite pluralité de groupes de commande (AMG-n) commandent de sorte que lesdits terminaux (5-n) appartiennent arbitrairement à un ou plusieurs desdits groupes de commande (AMG-n), et sélectionnant au moins un terminal dans ladite pluralité de groupes de commande (AMG-n) en tant que terminal de relais (5-n) qui relaie des informations dans ledit un des groupes de commande (AMG-n), et lesdits un ou plusieurs desdits terminaux (5-n) dans un groupe de commande parmi ladite pluralité de groupes de commande (AMG-n) échangent des informations avec les autres des groupes de commande (AMG-n) pour partager des données entre eux, et **en ce que**
dans le cas où le nombre desdits terminaux (5-n) appartenant audit groupe de commande (AMG-n) devient inférieur à un nombre de terminaux de construction minimum fixé précédemment, lesdits terminaux (5-n) appartenant à un autre groupe de commande (AMG-n) différent dudit groupe de commande (AMG-n) ou un terminal (5-n) en attente déterminé précédemment qui n'appartient à aucun des groupes de commande (AMG-n) sont amenés à appartenir audit groupe de commande (AMG-n).

29. Procédé de commande pour un système informatique selon la revendication 28, qui fait en sorte qu'un ou une pluralité de terminaux de relais parmi lesdits terminaux de relais fonctionnent en tant que terminal de relais entre groupes qui relaie des informations entre les autres desdits groupes de commande.

30. Procédé de commande pour un système informatique selon la revendication 28, qui fait en sorte que ledit terminal participe à un groupe de commande arbitraire auquel il appartient, ou qui désengage ledit terminal d'un groupe de commande arbitraire auquel il appartient.

31. Procédé de commande pour un système informatique selon la revendication 28, qui partage des informations propres audit groupe de commande avec ledit terminal, appartenant à l'un desdits groupes de commande.

32. Procédé de commande pour un système informatique selon la revendication 31, qui, une fois que ledit groupe de commande a été construit, fait en sorte que ledit terminal continue de maintenir lesdites informations propres jusqu'à ce que ledit groupe de commande disparaisse.

33. Procédé de commande pour un système informatique selon la revendication 29, dans lequel, dans ledit terminal de relais entre groupes, lorsqu'un échange d'informations est effectué entre un groupe de commande de source d'échange d'informations, qui est un groupe de commande auquel ledit terminal de relais entre groupes appartient, et un groupe de commande de destination d'échange d'informations qui est un autre desdits groupes de commande, il y a un groupe de commande autre que ledit groupe de commande de destination d'échange d'informations, et ledit procédé effectue ledit échange d'informations par l'intermédiaire d'un ou d'une pluralité de groupes de commande qui sont capables de communiquer à la fois avec ledit groupe de commande de source d'échange d'informations et ledit groupe de commande de destination d'échange d'informations.

34. Procédé de commande pour un système informatique selon la revendication 29, qui fournit, indépendamment d'une demande ou en réponse à une demande d'un autre groupe de commande, un terminal appartenant à des groupes de commande respectifs en tant que dit terminal de relais entre groupes.

35. Procédé de commande pour un système informatique selon la revendication 29, qui effectue, entre une pluralité desdits groupes de commande, l'acquisition et l'échange d'informations de groupes de commande respectifs par l'intermédiaire desdits terminaux de relais entre groupes, et qui effectue également des instructions et des demandes nécessaires pour l'acquisition et l'échange desdites informations.

36. Procédé de commande pour un système informatique selon la revendication 29, qui, entre une pluralité desdits groupes de commande, modifie arbitrairement la destination d'appartenance d'un terminal appartenant aux groupes de commande respectifs par l'intermédiaire dudit terminal de relais entre groupes.

37. Procédé de commande pour un système informatique selon la revendication 29, dans lequel une pluralité desdits groupes de commande adoptent une structure hiérarchique, et
qui fait en sorte que ledit terminal de relais entre groupes appartenant audit groupe de commande d'une k^{è} hiérarchie, k est une nombre naturel, appartienne audit groupe de commande d'une (k + 1)^{è} hiérarchie.

38. Procédé de commande pour une système informatique selon la revendication 29, dans lequel une pluralité desdits groupes de commande adoptent une structure hiérarchique, et
qui fournit, pour ledit groupe de commande d'une k^{è} hiérarchie, k est un nombre naturel, un terminal appartenant au groupe de commande de k^{è} hiérarchie en tant que dit terminal de relais entre groupes, pour ledit groupe de commande d'une (k + 1)^{è} hiérarchie.

39. Procédé de commande pour un système informatique selon la revendication 37, qui fournit, pour ledit groupe de commande d'une k^{è} hiérarchie, indépendamment d'une demande ou en réponse à une demande dudit groupe de commande de ladite (k + 1)^{è} hiérarchie, un terminal appartenant audit groupe de commande de k^{è} hiérarchie, en tant que dit terminal de relais entre groupes.

40. Procédé de commande pour un système informatique selon la revendication 38, qui fournit, pour ledit groupe de commande d'une k^{é} hiérarchie, indépendamment d'une demande ou en réponse à une demande dudit groupe de commande de ladite (k + 1)^{è} hiérarchie, un terminal appartenant audit groupe de commande de k^{è} hiérarchie, en tant que dit terminal de relais entre groupes.

41. Procédé de commande pour un système informatique selon l'une quelconque des revendications 37 à 40, qui sélectionne le terminal qui est fourni en tant que dit terminal de relais entre groupes sur la base de la capacité de traitement dudit terminal, ou d'une condition de charge dudit terminal.

42. Procédé de commande pour un système informatique selon la revendication 28, dans lequel une pluralité desdits groupes de commande adopte une structure hiérarchique,
qui fait en sorte que ledit groupe de commande d'une k^{é} hiérarchie, k est un nombre naturel, appartienne à un groupe de commande en attente déterminé précédemment dans le cas où, parmi lesdits groupes de commande de la (k + 1)^{è} hiérarchie, le groupe de commande immédiatement au-dessus dudit groupe de commande de k^{è} hiérarchie disparaît,
et, pour ledit groupe de commande de la (k + 2)^{è} hiérarchie, fait en sorte que ledit groupe de commande en attente participe dans le cas où le groupe de commande immédiatement au-dessous dudit groupe de commande de (k + 2)^{è} hiérarchie disparaît, et incorpore ledit groupe de commande en attente en tant que groupe de commande de la (k + 1)^{è} hiérarchie dans le cas où il y a un groupe de commande en attente.

43. Procédé de commande pour un système informatique selon la revendication 28, dans lequel une pluralité desdits groupes de commande adoptent une structure hiérarchique d'une m^{é} hiérarchie, qui donne à la pluralité desdits groupes de commande appartenant à la n^{è} hiérarchie, 1 ≤ n < m, le terminal de relais entre groupes de même hiérarchie qui relaie des informations partagées entre les autres desdits groupes de commande dans ladite n^{è} hiérarchie.

44. Procédé de commande pour un système informatique selon l'une quelconque des revendications 37 à 43, dans lequel ladite structure hiérarchique a une structure arborescente.

45. Procédé de commande pour un système informatique selon la revendication 44, dans lequel un groupe de commande appartenant à une hiérarchie la plus élevée est singulier.

46. Procédé de commande pour un système informatique selon la revendication 28, qui, lorsqu'il relaie lesdites informations dans des groupes de commande correspondant audit terminal, effectue le relais desdites informations par une transmission multidiffusion simultanée.

47. Procédé de commande pour un système informatique selon la revendication 28, dans lequel ledit groupe de commande est prévu pour une zone prédéterminée de réalité virtuelle qui gère le programme d'application.

48. Procédé de commande pour un système informatique selon la revendication 29, qui communique mutuellement une liste d'une pluralité de terminaux appartenant à un groupe de commande auquel les terminaux de relais respectifs appartiennent, et les informations de version de ladite liste audit terminal de relais et audit terminal de relais entre groupes.

49. Procédé de commande pour un système informatique selon la revendication 29, qui effectue un jugement de position en relation avec ledit terminal de relais entre groupes, dans le cas où une communication normale ne se produit pas entre d'autres terminaux de relais entre groupes, afin de déterminer si, oui ou non, lesdits autres terminaux de relais entre groupes fonctionnent normalement.

50. Procédé de commande pour un système informatique selon la revendication 49, qui, lorsque ladite communication de jugement de condition est effectuée, dans le cas où, parmi la pluralité desdits autres terminaux de relais entre groupes qui deviennent l'objet de ladite communication de jugement de condition, un terminal de relais entre groupes n'appartenant pas à la hiérarchie supérieure n'est pas présent, empêche ladite communication de jugement de condition.

51. Support d'enregistrement sur lequel est enregistré un programme de commande pour des terminaux (5-n) capables de construire un système informatique, en étant mutuellement connectés par l'intermédiaire d'un réseau (1), **caractérisé en ce que** ledit programme de commande, construit une pluralité de groupes de commande (AMG-n) à partir de ladite pluralité de terminaux (5-n) de sorte que ladite pluralité de terminaux (5-n) appartiennent arbitrairement à un ou plusieurs desdits groupes de commande (AMG-n), et sélectionne au moins un terminal dans ladite pluralité de groupes de commande (AMG-n) en tant que terminal de relais (5-n) qui relaie des informations dans ledit groupe de commande (AMG-n), et lesdits un ou plusieurs desdits terminaux (5-n) dans un groupe de commande parmi ladite pluralité de groupes de commande (AMG-n) échangent des informations avec les autres des groupes de commande (AMG-n) pour partager des données entre eux, et **en ce que**
dans le cas où le nombre desdits terminaux (5-n) appartenant audit groupe de commande (AMG-n) devient inférieur à un nombre de terminaux de construction minimum fixé précédemment, lesdits terminaux (5-n) appartenant à un autre groupe de commande (AMG-n) différent dudit groupe de commande (AMG-n) ou un terminal (5-n) en attente déterminé précédemment qui n'appartient à aucun des groupes de commande (AMG-n) sont amenés à appartenir audit groupe de commande (AMG-n).

52. Support d'enregistrement selon la revendication 51, sur lequel est enregistré un programme de commande qui fait en sorte qu'un ou une pluralité de terminaux de relais parmi lesdites terminaux de relais fonctionnent en tant que terminal de relais entre groupes qui relaie des informations entre les autres desdits groupes de commande.

53. Support d'enregistrement selon la revendication 51, sur lequel est enregistré un programme de commande qui fait en sorte que ledit terminal participe à un groupe de commande arbitraire auquel il appartient, ou qui désengage ledit terminal d'un groupe de commande arbitraire auquel il appartient.

54. Support d'enregistrement selon la revendication 51, sur lequel est enregistré un programme de commande qui fait en sorte que ledit terminal de relais entre groupes appartenant audit groupe de commande d'une k^{è} hiérarchie, k est un nombre naturel, appartienne audit groupe de commande d'une (k + 1)^{è} hiérarchie.

55. Support d'enregistrement selon la revendication 51, sur lequel est enregistré un programme de commande qui, une fois que ledit groupe de commande a été construit, fait en sorte que ledit terminal continue de maintenir lesdites informations propres jusqu'à ce que ledit groupe de commande disparaisse.

56. Support d'enregistrement selon la revendication 52, sur lequel est enregistré un programme de commande, dans lequel, dans ledit terminal de relais entre groupes, lorsqu'un échange d'informations est effectué entre un groupe de commande de source d'échange d'informations, qui est un groupe de commande auquel ledit terminal de relais entre groupes appartient, et un groupe de commande de destination d'échange d'informations qui est un autre desdits groupes de commande, il y a un groupe de commande autre que ledit groupe de commande de destination d'échange d'informations, et ledit programme effectue ledit échange d'informations par l'intermédiaire d'un ou d'une pluralité de groupes de commande qui sont capables de communiquer à la fois avec ledit groupe de commande de source d'échange d'informations et ledit groupe de commande de destination d'échange d'informations.

57. Support d'enregistrement selon la revendication 52, sur lequel est enregistré un programme de commande qui sélectionne le terminal qui est fournit en tant que dit terminal de relais entre groupes, sur la base de la capacité de traitement dudit terminal, ou d'une condition de charge dudit terminal.

58. Support d'enregistrement selon la revendication 51, sur lequel est enregistré un programme de commande qui, dans le cas où le nombre desdits terminaux appartenant audit groupe de commande devient inférieur à un nombre de terminaux de construction minimum fixé précédemment, établit un terminal en attente déterminé précédemment qui n'appartient à aucun des groupes de commande comme appartenant audit groupe de commande.

59. Support d'enregistrement selon la revendication 52, sur lequel est enregistré un programme de commande qui :
fait en sorte qu'une pluralité desdits groupes de commande aient une structure hiérarchique, et
fournit, à partir dudit groupe de commande d'une k^{è} hiérarchie, k est un nombre naturel, un terminal appartenant audit groupe de commande de k^{è} hiérarchie en tant que dit terminal de relais entre groupes, pour ledit groupe de commande d'une (k + 1)^{è} hiérarchie.

60. Support d'enregistrement selon la revendication 59, sur lequel est enregistré an programme de commande qui fait en sorte que ledit groupe de commande d'une k^{è} hiérarchie fournisse, indépendamment d'une demande ou en réponse à une demande dudit groupe de commande de ladite (k + 1)^{è} hiérarchie, un terminal appartenant audit groupe de commande de k^{è} hiérarchie en tant que dit terminal de relais entre groupes.

61. Support d'enregistrement selon la revendication 51, sur lequel est enregistré une programme de commande qui :
fait en sorte qu'une pluralité desdits groupes de commande aient une structure hiérarchique,
et fait en sorte que ledit groupe de commande d'une k^{è} hiérarchie, k est un nombre naturel, appartienne à un groupe de commande en attente déterminé précédemment dans le cas où, parmi lesdits groupes de commande d'une (k + 1)^{è} hiérarchie, le groupe de commande immédiatement au-dessus dudit groupe de commande de k^{è} hiérarchie disparaît, et
fait en sorte que ledit groupe de commande en attente participe audit groupe de commande d'une (k + 2)^{è} hiérarchie, dans le cas où le groupe de commande immédiatement au-dessous du groupe de commande de (k + 2)^{è} hiérarchie disparaît, et incorpore ledit groupe de commande en attente en tant que groupe de commande de la (k + 1)^{è} hiérarchie dans le cas où il y a un groupe de commande en attente.

62. Support d'enregistrement selon la revendication 52, sur lequel est enregistré un programme de commande qui fait en sorte que ledit terminal de relais et ledit terminal de relais entre groupes communiquent entre eux une liste d'une pluralité de terminaux appartenant à un groupe de commande auquel les terminaux de relais respectifs appartiennent, et les informations de version de ladite liste.

63. Support d'enregistrement selon la revendication 52, sur lequel est enregistré un programme de commande qui fait en sorte que ledit terminal de relais entre groupes, dans le cas où une communication normale ne se produit pas entre d'autres terminaux de relais entre groupes, effectue une communication de jugement de condition afin de déterminer si, oui ou non, lesdits autres terminaux de relais entre groupes fonctionnent normalement.

64. Support d'enregistrement selon la revendication 56, sur lequel est enregistré un programme de commande qui, lorsque ladite communication de jugement de condition est effectuée, dans le cas où, parmi la pluralité desdits autres terminaux de relais entre groupes qui deviennent l'objet de ladite communication de jugement de condition, un terminal de relais entre groupes n'appartenant pas à la hiérarchie supérieure n'est pas présent, empêche ladite communication de jugement de condition.
